(19) Europäisches Patentamt
European Patent Office
Office européen des brevets

(11) Veröffentlichungsnummer: **0 167 768**
**A2**

# (12) EUROPÄISCHE PATENTANMELDUNG

(21) Anmeldenummer: **85106422.0**

(22) Anmeldetag: **24.05.85**

(51) Int. Cl.⁴: **A 01 N 47/42**
A 01 N 47/38, A 01 N 43/84
A 01 N 43/653, A 01 N 43/60
A 01 N 43/54, A 01 N 43/50
A 01 N 43/40, A 01 N 43/36
//(A01N47/42, 47:38, 43:84, 43:653, 43:60, 43:54, 43:50, 43:40, 43:36, 43:28, 43:08), (A01N47/38, 43:84, 43:60, 43:54, 43:40, 43:36, 43:28, 43:08)

(30) Priorität: **05.06.84 DE 3420828**

(43) Veröffentlichungstag der Anmeldung:
**15.01.86 Patentblatt 86/3**

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Krämer, Wolfgang, Dr.**
**Am Eckbusch 39/45**
**D-5600 Wuppertal(DE)**

(72) Erfinder: **Weissmüller, Joachim, Dr.**
**Carl-Langhaus Strasse 53**
**D-4019 Monheim(DE)**

(72) Erfinder: **Reiser, Wolf, Dr.**
**Kiebitzweg 12a**
**D-5600 Wuppertal 1(DE)**

(72) Erfinder: **Berg, Dieter, Dr.**
**Gellertweg 27**
**D-5600 Wuppertal 1(DE)**

(72) Erfinder: **Brandes, Wilhelm, Dr.**
**Eichendorffstrasse 3**
**D-5653 Leichlingen(DE)**

(72) Erfinder: **Reinecke, Paul, Dr.**
**Steinstrasse 8**
**D-5090 Leverkusen 3(DE)**

(54) **Fungizide Mittel.**

(57) Die Erfindung betrifft neue fungizide synergistische Wirkstoffkombinationen bestehend aus Aminoverbindungen der Formel

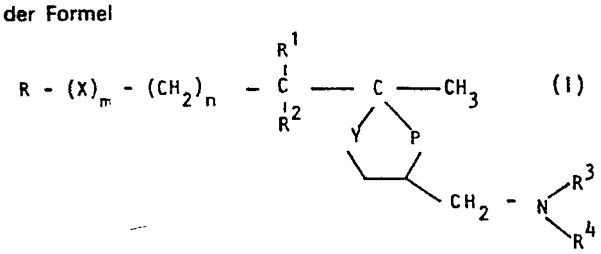

(I)

in welcher

R, $R^1$, $R^2$, $R^3$, $R^4$, X Y, m und n die in der Beschreibung gegebene Bedeutung haben, mit anderen fungiziden Wirkstoffen, wie Azolderivaten, Pyrimidinderivaten, Pyridinderivaten und Morpholinoverbindungen.

EP 0 167 768 A2

BAYER AKTIENGESELLSCHAFT
5090 Leverkusen, Bayerwerk
Konzernverwaltung RP
Patentabteilung
Bas/ABc
III

## Fungizide Mittel

Die Erfindung betrifft neue fungizide synergistische Wirkstoffkombinationen aus speziellen teilweise bekannten Aminoverbindungen und anderen bekannten fungiziden Wirkstoffen.

Es ist bereits bekannt, daß bestimmte Aminoverbindungen, wie beispielsweise die Aminoketale 4-(3,5-Dimethyl-piperidin-1-yl-methyl)-2-/1-(4-fluorphenyl)-2-methyl-prop-2-yl7-2-methyl-1,3-dioxolan oder das 2-/1-(4-Fluor-phenyl)-2-methyl-prop-2-yl7-2-methyl-4-(3-methyl-piperidin-1-yl-methyl)-1,3-dioxolan, fungizide Eigenschaften besitzen (vgl. z.B. DE-OS 33 05 769).

Ebenfalls bekannt sind die folgenden fungiziden Wirkstoffgruppen:

A) Azole wie z.B. 1-(4-Chlorphenoxy)-3,3-dimethyl-1-(1,2,4-triazol-1-yl)-butan-2-on (vgl. z.B. R.Wegler "Chemie der Pflanzenschutz- und Schädlingsbekämpfungsmittel", Band 4, Seite 206 bis 208, Springer Verlag, Berlin, Heidelberg, New York 1977),

B) Pyrimidinderivate wie z.B. (2,4-Dichlorphenyl)-(phenyl)-(pyrimidin-5-yl)-carbinol oder (2-Chlorphenyl)-(4-chlorphenyl)-(pyrimidin-5-yl)-carbinol (vgl. z.B. R. Wegler "Chemie der Pflanzenschutz- und Schädlingsbekämpfungsmittel" Band 4, S. 213/214; Springer Verlag Berlin, Heidelberg, New York 1977),

C) Pyridinderivate wie z.B. S-(n-Butyl)-S-(4-t-butylphenylmethyl)-N-(3-pyridyl)-imino-dithiocarbonat (vgl. z.B. Jap. Pat. Anmeldung Ja 43 334/72),

D) Morpholinoverbindungen wie z.B. cis-2,6-Dimethyl-4-[3-(4-t-butylphenyl)-2-methyl-prop-1-yl]-morpholin (vgl. z.B. DE-OS 26 56 747).

Außerdem sind synergistische Mischungen aus Azolen und anderen Fungiziden bekannt, die eine beachtlich höhere Wirkung besitzen als die Wirkungen der Einzelkomponenten erwarten lassen (vgl. z.B. DE-OS 25 52 967).

Die Wirksamkeit der bekannten fungiziden Wirkstoffe als Einzelverbindungen, ebenso wie die der bekannten synergistischen Wirkstoffkombinationen sind jedoch, insbesondere bei niedrigen Aufwandmengen und -konzentrationen, nicht immer in allen Anwendungsbereichen völlig zufriedenstellend.

Es wurde nun überraschend gefunden, daß die neuen Wirkstoffkombinationen aus speziellen teilweise bekannten Aminoverbindungen der Formel (I),

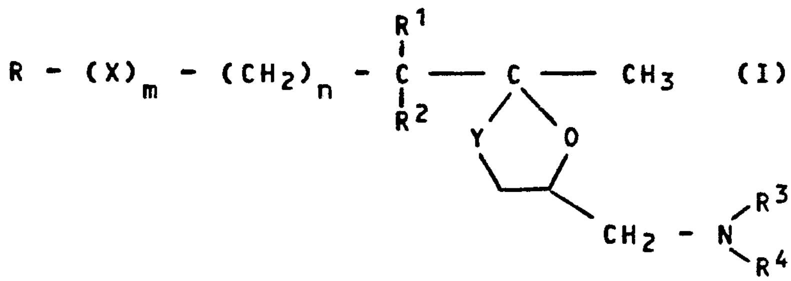

(I)

in welcher

R für gegebenenfalls substituiertes Cycloalkyl oder für gegebenenfalls substituiertes Aryl steht,

$R^1$ für Wasserstoff oder Alkyl steht,

$R^2$ für Alkyl steht,

$R^3$ für Alkyl steht und

$R^4$ für Alkyl, Alkenyl oder Alkinyl steht, oder

$R^3$ und $R^4$ gemeinsam mit dem Stickstoffatom, an welches sie gebunden sind, für einen gegebenenfalls substituierten gesättigten Heterocyclus stehen, der weitere Heteroatome enthalten kann,

X für Sauerstoff oder Schwefel steht,

Y für Sauerstoff, Schwefel oder die Methylengruppe steht,

m für 0 oder 1 steht und
n für 0 oder 1 steht,

oder deren pflanzenverträglichen Säureadditionssalzen, Metallsalzkomplexen oder Quaternierungsprodukten einerseits und bekannten fungiziden Wirkstoffen entweder aus der Gruppe

($A_1$) mit der Formel (IIa)

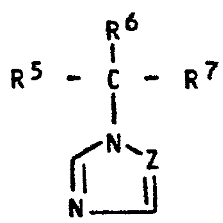

(IIa)

in welcher

$R^5$ für Alkyl, Alkenyl, Alkinyl, Cycloalkyl, Alkylcarbonyl, für gegebenenfalls substituiertes Phenyl, für gegebenenfalls substituiertes Phenylcarbonyl, für einen gegebenenfalls substituierten Heterocyclus, für die Cyanogruppe, für eine Estergruppierung oder für einen Säureamidrest steht,

$R^6$ für Alkyl, Cycloalkyl oder für gegebenenfalls substituiertes Phenyl steht,

$R^7$ für gegebenenfalls substituiertes Phenyl steht und

Z für Stickstoff oder die CH-Gruppe steht,

oder deren pflanzenverträglichen Säureadditionssalzen oder Metallsalzkomplexen,

und/oder aus der Gruppe

($A_2$) mit der Formel (IIb)

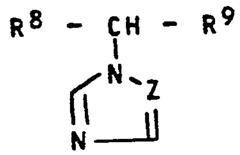

(IIb)

in welcher

$R^8$ für Wasserstoff, für jeweils gegebenenfalls substituiertes Alkyl, Alkenyl, Alkinyl, Cycloalkyl, Aryl, Aryloxy oder Heteroaryloxy steht,

$R^9$ für jeweils gegebenenfalls substituiertes Alkylcarbonyl oder Arylcarbonyl oder für ein funktionelles Derivat dieser Gruppen, wie Oxim, Hydrazon oder Ketal steht, ferner für eine Carboxygruppe oder ein funktionelles Derivat dieser, wie Ester oder Amid steht, außerdem

für einen Rest $-\underset{OH}{CH}-R^{10}$ oder ein funktionelles Derivat dessen, wie Ester oder Ether steht, wobei

$R^{10}$ für jeweils gegebenenfalls substituiertes Alkyl oder Aryl steht und

Z die oben angegebene Bedeutung hat oder

deren pflanzenverträglichen Säureadditionssalzen oder Metallsalzkomplexen, und/oder aus der Gruppe

($A_3$) mit der Formel (IIc),

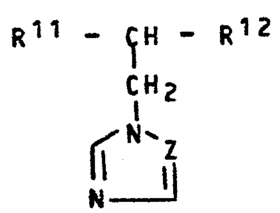

(IIc)

in welcher

$R^{11}$ für jeweils gegebenenfalls substituiertes Aryl oder Aryloxy steht und

$R^{12}$ für Alkyl oder für einen Rest $-S(O)_p-R^8$ steht, wobei p für 0, 1 oder 2 steht und $R^8$ die oben angegebene Bedeutung hat, außerdem für

jeweils gegebenenfalls substituiertes Alkylcarbonyl oder Arylcarbonyl oder für ein funktionelles Derivat dieser Gruppen, wie Oxim, Hydrazon oder Ketal steht oder für einen Rest $-\underset{OH}{\underset{|}{CH}}-R^{10}$

oder für ein funktionelles Derivat dessen, wie Ester oder Ether steht, wobei

$R^{10}$ und Z die oben angegebene Bedeutung haben oder

deren pflanzenverträglichen Säureadditionssalzen oder Metallsalzkomplexen, und/oder aus der Gruppe

($A_4$) mit der Formel (IId),

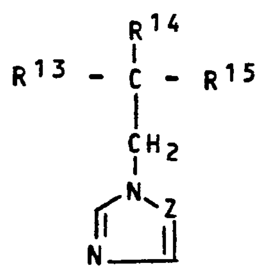

(IId)

in welcher

$R^{13}$ für jeweils gegebenenfalls substituiertes Alkyl, Alkenyl, Alkinyl, Cycloalkyl, Heterocyclyl, Aryl oder Heteroaryl steht,

$R^{14}$ für jeweils gegebenenfalls substituiertes Alkyl, Alkenyl, Alkinyl, Cycloalkyl oder Aryl steht,

$R^{15}$ für Chlor, Cyano oder einen Rest $-OR^{16}$ steht, wobei $R^{16}$ für Wasserstoff oder für jeweils gegebenenfalls substituiertes Alkyl, Alkenyl, Alkinyl oder Acyl steht und

Z die oben angegebene Bedeutung hat,

oder deren pflanzenverträglichen Säureadditionssalzen oder Metallsalzkomplexen, und/oder aus der Gruppe

($A_5$) mit der Formel (IIe),

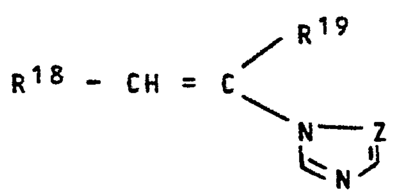

(IIe)

in welcher

$R^{18}$ für jeweils gegebenenfalls substituiertes Alkyl, Cycloalkyl oder Aryl steht,

$R^{19}$ für jeweils gegebenenfalls substituiertes Alkylcarbonyl oder Arylcarbonyl oder für ein funktionelles Derivat dieser Gruppen, wie Oxim, Hydrazon oder Ketal steht oder für einen

Rest $-\underset{|}{CH}-R^{10}$ oder

OH

ein funktionelles Derivat dessen, wie Ester oder Ether steht, wobei

$R^{10}$ und Z die oben angegebene Bedeutung haben,

oder deren pflanzenverträglichen Säureadditionssalzen oder Metallsalzkomplexen und/oder aus der Gruppe

($A_6$) mit der Formel (IIf),

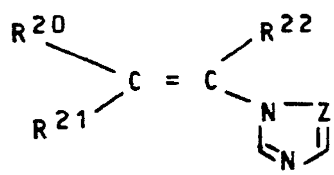

(IIf)

in welcher

$R^{20}$ für Alkyl, für gegebenenfalls substituiertes Phenyl oder für gegebenenfalls substituiertes Phenoxy steht,

$R^{21}$ für jeweils gegebenenfalls substituiertes Alkylcarbonyl oder Arylcarbonyl oder für ein funktionelles Derivat dieser Gruppen, wie Oxim, Hydrazon oder Ketal steht oder für einen

Rest $-\underset{OH}{CH}-R^{10}$ oder

ein funktionelles Derivat dessen wie Ester, Ether oder Trialkylsilylether steht,

$R^{22}$ für Wasserstoff oder für jeweils gegebenenfalls substituiertes Aryl oder Aryloxy steht und

$R^{10}$ und Z die oben angegebene Bedeutung haben,

oder deren pflanzenverträglichen Säureadditionssalzen oder Metallkomplexen und/oder aus der Gruppe

($A_7$) mit der Formel (IIg)

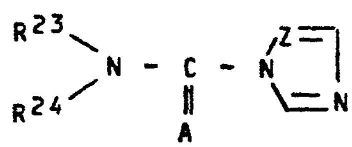

(IIg)

in welcher

$R^{23}$ für Alkyl steht,

$R^{24}$ für jeweils gegebenenfalls substituiertes Alkyl, Alkenyl, Alkinyl, Cycloalkyl oder Aryl steht,

A für Sauerstoff oder Schwefel steht und

Z die oben angegebene Bedeutung hat,

oder deren pflanzenverträglichen Säureadditionsalzen oder Metallsalzkomplexen und/oder aus der Gruppe

($A_8$) mit der Formel (IIh),

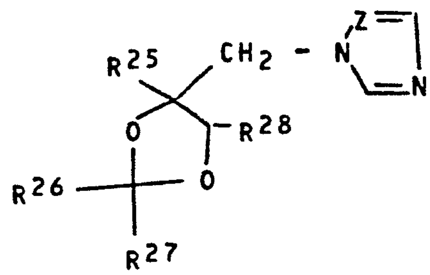

(IIh)

in welcher

$R^{25}$ für gegebenenfalls substituiertes Aryl steht,

$R^{26}$ und $R^{27}$ jeweils unabhängig voneinander für Wasserstoff, Alkyl oder Aryl stehen oder gemeinsam für einen zweifach verknüpften Alkylenrest stehen,

$R^{28}$ für Wasserstoff oder Alkyl steht und

Z die oben angegebene Bedeutung hat,

oder deren pflanzenverträglichen Säureadditionssalzen oder Metallsalzkomplexen und/oder aus der Gruppe

(B) mit der Formel (III),

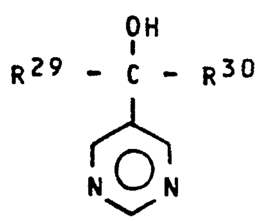

(III)

in welcher

$R^{29}$ für Alkyl, Cycloalkyl oder für gegebenenfalls substituiertes Aryl steht und

$R^{30}$ für jeweils gegebenenfalls substituiertes Aryl, Aralkyl oder Aryloxyalkyl steht

oder deren pflanzenverträglichen Säureadditionssalzen und/oder aus der Gruppe

(C) mit der Formel (IV),

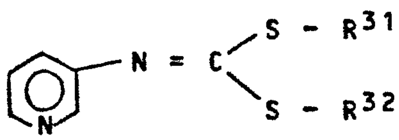

(IV)

in welcher

$R^{31}$ und $R^{32}$ unabhängig voneinander für Alkyl oder für gegebenenfalls substituiertes Aralkyl stehen,

oder deren pflanzenverträglichen Säureadditionssalzen und/oder aus der Gruppe

(D) mit der Formel (V)

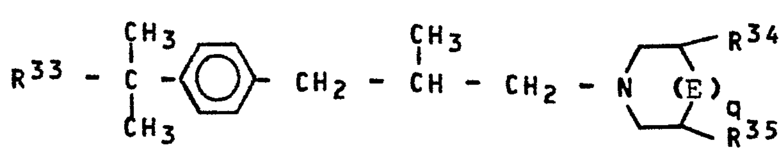

(V)

in welcher

$R^{33}$ für Alkyl, Cycloalkyl oder Halogenalkyl steht,

$R^{34}$ und $R^{35}$ unabhängig voneinander für Wasserstoff, Alkyl, Hydroxyalkyl, Hydroxy oder Aryl stehen,

E für Sauerstoff, Schwefel, zweifach verknüpftes Alkylen oder die $>N-R^{36}$-Gruppe steht, wobei

$R^{36}$ für Wasserstoff oder Alkyl steht und

q für 0 oder 1 steht,

oder deren pflanzenverträglichen Säureadditionssalzen andererseits,

- wobei alle geometrischen und optischen Isomeren der Verbindungen der Formeln (I) bis (V) eingeschlossen sind -

eine besonders hohe fungizide Wirksamkeit besitzen.

Überraschenderweise ist die fungizide Wirkung der erfindungsgemäßen Wirkstoffkombinationen aus den teilweise bekannten Aminoverbindungen der Formel (I) einerseits und Azol-Derivaten der Formeln (IIa - h) und/oder Pyrimidinderivaten der Formel (III) und/oder Pyridinderivaten der Formel (IV) und/oder Aminoverbindungen der Formel (V) andererseits höher als die Wirkung der Einzelkomponenten und auch höher als die Summe der Wirkungen der Einzelkomponenter (Synergistischer Effekt).

Die erfindungsgemäßen Wirkstoffkombinationen stellen somit eine Bereicherung der Technik dar.

Die für die erfindungsgemäßen Wirkstoffkombinationen zu verwendenden speziellen teilweise bekannten Aminoverbindungen sind durch die Formel (I) allgemein definiert. Bevorzugt sind Verbindungen der Formel (I), bei welchen

R für gegebenenfalls einfach bis mehrfach, gleich oder verschieden substituiertes Phenyl oder Cyclohexyl steht, wobei als Substituenten in Frage kommen: Halogen, jeweils geradkettiges oder verzweigtes Alkyl, Alkoxy, Alkylthio, Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen,

$R^1$ für Wasserstoff oder für geradkettiges oder verzweigtes Alkyl mit 1 bis 4 Kohlenstoffatomen steht,

$R^2$ für geradkettiges oder verzweigtes Alkyl mit 1 bis 4 Kohlenstoffatomen steht,

$R^3$ für geradkettiges oder verzweigtes Alkyl mit 1 bis 6 Kohlenstoffatomen steht und

$R^4$ für jeweils geradkettiges oder verzweigtes Alkyl, Alkenyl oder Alkinyl mit jeweils bis zu 8 Kohlenstoffatomen steht, oder

$R^3$ und $R^4$ gemeinsam mit dem Stickstoffatom, an welches sie gebunden sind, für einen gegebenenfalls einfach oder mehrfach, gleich oder verschieden substituierten gesättigten Heterocyclus mit 5 bis 7 Ringgliedern und 1 oder 2 Heteroatomen stehen, wobei als Heteroatome Stickstoff und Sauerstoff in Frage kommen und wobei als Substituenten in Frage kommen: geradkettiges oder verzweigtes Alkyl mit 1 bis 4 Kohlenstoffatomen, Hydroxymethyl und Derivate davon, wie Ether und Ester, sowie geradkettiges oder verzweigtes Alkoxycarbonyl mit 1 bis 4 Kohlenstoffatomen,

X für Sauerstoff oder Schwefel steht,

Y für Sauerstoff, Schwefel oder die Methylengruppe steht,

m für 0 oder 1 steht und

n für 0 oder 1 steht,

sowie deren pflanzenverträgliche Säureadditionssalze, Metallsalzkomplexe und Quaternierungsprodukte.

Als Mischungskomponenten besonders bevorzugt sind Aminoverbindungen der Formel (I), bei welchen

R für gegebenenfalls ein- bis dreifach, gleich oder verschieden substituiertes Phenyl steht, wobei

als Substituenten in Frage kommen: Fluor, Chlor, Brom, Methyl, Ethyl, n- und i-Propyl, n-, i-, s- und t-Butyl, Methoxy, Ethoxy, n- und i-Propoxy, Methylthio, Trifluormethyl, Trifluormethoxy und Trifluormethylthio, oder für gegebenenfalls ein- bis fünffach, gleich oder verschieden substituiertes Cyclohexyl steht, wobei als Substituenten in Frage kommen: Methyl, Ethyl, n- und i-Propyl,

$R^1$ für Wasserstoff oder Methyl steht,

$R^2$ für Methyl oder Ethyl steht,

$R^3$ für Methyl steht und

$R^4$ für Methyl, Ethyl, n- und i-Propyl, n- und i-Butyl, n- und i-Pentyl, n- und i-Hexyl, Allyl,Butenyl, n- und i-Pentenyl, n- und i-Hexenyl, Propargyl, Butinyl, n- und i-Pentinyl oder n- und i-Hexinyl steht oder

$R^3$ und $R^4$ gemeinsam mit dem Stickstoffatom, an welches sie gebunden sind, für einen gegebenenfalls ein- bis vierfach, gleich oder verschieden substituierten Heterocyclus der Formel

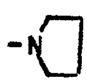 ; 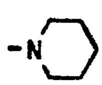 ; 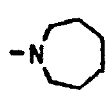 ; 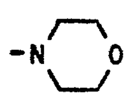 oder 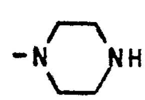

stehen, wobei als Substituenten in Frage kommen:

Methyl, Ethyl, Phenyl, Hydroxymethyl, Methoxymethyl, Ethoxymethyl, Acyloxymethyl, Methoxycarbonyl oder Ethoxycarbonyl,

X für Sauerstoff oder Schwefel steht,

Y für Sauerstoff, Schwefel oder die Methylengruppe steht,

m für 0 oder 1 steht und

n für 0 oder 1 steht,

sowie deren pflanzenverträgliche Säureadditionssalze, Metallsalzkomplexe und Quaternierungsprodukte.

Die Verbindungen der Formel (I) sind teilweise bekannt (vgl. z.B. EP-A 97 822).

Die noch nicht bekannten Vertreter sind Gegenstand eigener, früherer, noch nicht veröffentlichter Patentanmeldungen (vgl. DE-P 33 28 151 vom 4.8.1983; DE-P 33 24 769 vom 8.7.1983 und DE-P 34 14 996 vom 13.4.1984).

Man erhält sie beispielsweise, wenn man Verbindungen der Formel (VI),

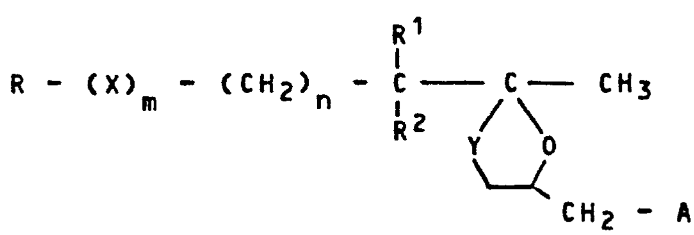

(VI)

in welcher

R, $R^1$, $R^2$, X, Y, m und n die oben angegebene Bedeutung haben und

A für eine elektronenanziehende Abgangsgruppe, insbesondere für Chlor oder Brom, Methansulfonyloxy oder p-Toluolsulfonyloxy steht,

mit Aminen der Formel (VII)

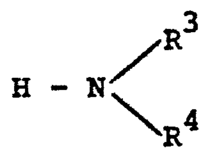

(VII)

in welcher

$R^3$ und $R^4$ die oben angegebene Bedeutung haben,

gegegebenenfalls in Gegenwart eines Verdünnungsmittels, wie beispielsweise Ethanol, gegebenenfalls in Gegenwart eines Säurebindemittels, wie beispielsweise Kaliumcarbonat, und gegebenenfalls in Gegenwart eines Katalysators, wie beispielsweise Kaliumiodid, bei Temperaturen zwischen 50°C und 250°C umsetzt.

Zur Herstellung von pflanzenverträglichen Säureadditionssalzen der Verbindungen der Formel (I) kommen vorzugsweise folgende Säuren in Frage: Halogenwasserstoffsäuren, wie z.B. Chlorwasserstoffsäure und Bromwasserstoffsäure, insbesondere Chlorwasserstoffsäure, ferner

Phosphorsäure, Salpetersäure, Schwefelsäure, mono-, bi- und trifunktionelle Carbonsäuren und Hydroxycarbonsäuren, wie z.B. Essigsäure, Maleinsäure, Bernsteinsäure, Fumarsäure, Weinsäure, Zitronensäure, Salizylsäure, Sorbinsäure, Milchsäure, sowie Sulfonsäuren, wie z.B. p-Toluolsulfonsäure und 1,5-Naphthalindisulfonsäure.

Die Säureadditionssalze der Verbindungen der Formel (I) können in einfacher Weise nach üblichen Salzbildungsmethoden, wie z.B. durch Lösen einer Verbindung der Formel (I) in einem geeigneten inerten Lösungsmittel und Hinzufügen der Säure, wie z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Zur Herstellung von Metallsalz-Komplexen der Verbindungen der Formel (I) kommen vorzugsweise Salze von Metallen der II. bis IV. Haupt- und der I. und II. sowie IV bis VIII. Nebengruppe in Frage, wobei Kupfer, Zink, Mangan, Magnesium, Zinn, Eisen und Nickel beispielhaft genannt seien.

Als Anionen von Salzen kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalzkomplexe von Verbindungen der Formel (I) können in einfacher Weise nach üblichen Verfahren erhalten werden, so z.B. durch Lösen des Metallsalzes in Alkohol, z.B. Ethanol und Hinzufügen zur Verbindung der Formel (I). Man kann Metallsalz-Komplexe in bekannter Weise, z.B. durch Abfiltrieren, Isolieren und gegebenenfalls durch Umkristallisation reinigen.

Zur Herstellung von Quaternierungsprodukten der Verbindungen der Formel (I) kommen vorzugsweise Alkyl- bzw. Aralkylhalogenide, -sulfate oder -sulfonate, wie beispielsweise Methyliodid, Dimethyl- oder Diethylsulfat, Benzylchlorid oder -bromid, Methyl- oder Ethyl-p-toluolsulfonat in Frage.

Die Quaternierungsprodukte der Verbindungen der Formel (I) können in einfacher Weise nach üblichen Methoden, wie z.B. durch Umsetzen der Reaktionskomponenten in einem geeigneten Lösungsmittel wie beispielsweise Acetonitril oder Aceton erhalten werden und in bekannter Weise, z.B. durch Ausfällen mit einem geeigneten Fällungsmittel, wie z.B. Diethylether und Absaugen isoliert werden und durch Waschen mit einem inerten organischen Lösungsmittel gereinigt werden.

Die als Mischungskomponenten zu verwendenden Fungizide der Gruppe $A_1$ bis $A_8$, B, C und D sind in der Literatur bereits beschrieben; vgl. hierzu folgende Angaben:

($A_1$) Verbindungen der Formel (IIa):
DE-OS 16 70 976; DE-PS 17 95 249;
DE-OS 21 28 700; DE-OS 26 28 152.

($A_2$) Verbindungen der Formel (IIb):

| | |
|---|---|
| DE-OS 20 63 857; | DE-OS 21 05 490; |
| DE-OS 22 01 063; | DE-OS 23 24 010; |
| DE-OS 23 25 156; | DE-OS 23 33 354; |
| DE-OS 24 31 407; | DE-OS 25 47 953; |
| DE-OS 25 51 560; | DE-OS 26 00 799; |
| DE-OS 26 10 022; | DE-OS 26 32 603; |
| DE-OS 26 35 663; | DE-OS 26 38 470; |
| DE-OS 26 40 823; | DE-OS 26 54 890; |
| DE-OS 27 20 654; | DE-OS 27 20 949; |
| DE-OS 27 34 365; | DE-OS 27 34 426; |
| DE-OS 27 37 489; | DE-OS 27 56 269; |
| DE-OS 28 00 544; | DE-OS 28 11 919; |
| DE-OS 28 19 879; | DE-OS 28 32 233; |
| DE-OS 28 32 234; | DE-OS 29 18 467; |
| DE-OS 29 26 096; | DE-OS 29 43 631; |
| DE-OS 29 51 163; | DE-OS 29 51 164; |
| DE-OS 30 02 430; | DE-OS 30 19 049; |
| DE-OS 30 48 266; | DE-OS 30 48 267; |
| DE-OS 31 39 370; | DE-OS 32 09 431; |
| DE-OS 32 08 194; | DE-OS 33 10 830; |

EP-OS 15 639; EP-OS 60 962; US-PS 4 166 854.

($A_3$) Verbindungen der Formel ( IIc):

| | |
|---|---|
| DE-OS 23 06 495; | DE-OS 23 35 020; |
| DE-OS 23 50 122; | DE-OS 20 63 857; |
| DE-OS 27 35 872; | DE-OS 26 45 496; |

($A_4$) Verbindungen mit der Formel (IId):

DE-OS 26 04 047; DE-OS 27 36 122;
DE-OS 29 20 374; DE-OS 30 18 866;
DE-OS 31 06 076; DE-OS 32 02 601;
DE-OS 32 37 400; DE-OS 32 42 222;
DE-OS 32 42 252; DE-OS 32 45 504;
DE-OS 33 07 216;
EP-OS 15 756; EP-OS 36 153; EP-OS 44 605; EP-OS 46 337;
EP-OS 47 594; EP-OS 48 548; EP-OS 52 424; EP-OS 54 974;
EP-OS 55 997; EP-OS 61 835; EP-OS 78 594; EP-OS 91 309;
EP-OS 97 469; EP-OS 97 480; EP-OS 101 212.

($A_5$) Verbindungen mit der Formel (IIe):

DE-OS 26 45 617; DE-OS 28 38 847;
DE-OS 29 06 061; DE-OS 29 29 602;
DE-OS 29 38 422; DE-OS 30 10 560;
DE-OS 30 25 242; DE-OS 30 28 330;

($A_6$) Verbindungen mit der Formel (IIf):

DE-OS 28 45 980; DE-OS 29 28 967;
DE-OS 29 31 755; EP-OS 28 363;

($A_7$) Verbindungen mit der Formel (IIg):

DE-OS 24 29 523; DE-OS 28 56 974;
US-PS 4.208.411.

($A_8$) Verbindungen mit der Formel (IIh):
EP-OS 94 167

(B) Verbindungen mit der Formel (III):
DE-OS 17 70 288; DE-OS 27 42 173.

(C) Verbindungen mit der Formel (IV):
Jap. Pat. 43 334 172

(D) Verbindungen mit der Formel (V):
DE-OS 28 30 127.

Bevorzugte Mischungspartner sind insbesondere:

aus der Gruppe ($A_1$)

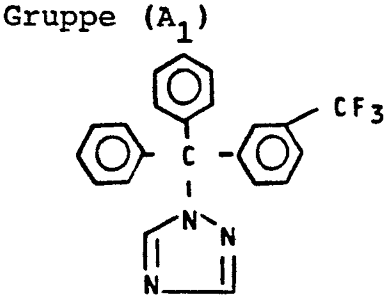

(IIa-1)

aus der Gruppe ($A_2$):

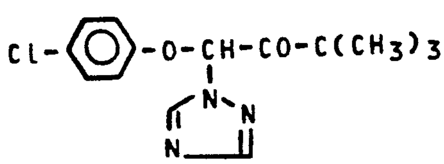

(IIb-1)

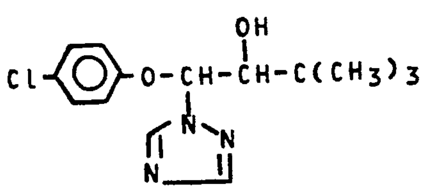

(II b-2)

Aus der Gruppe $(A_2)$:

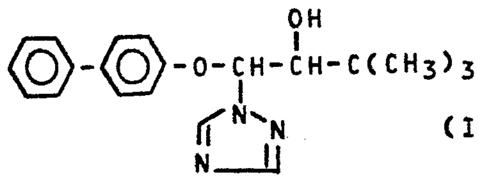

(IIb-3)

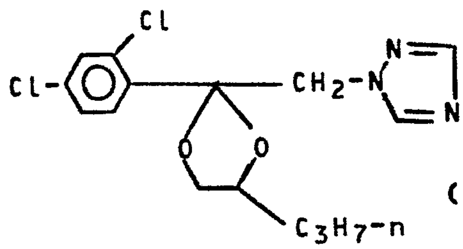

(II b-4)

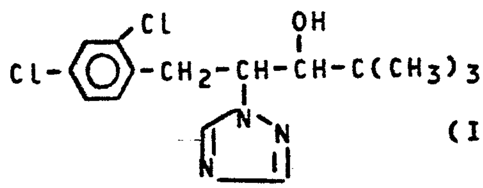

(II b-5)

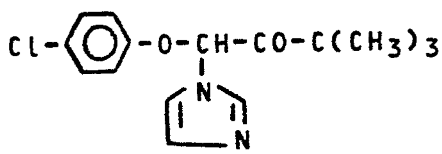

(II b-6)

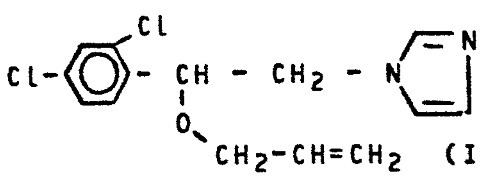

(IIb-7)

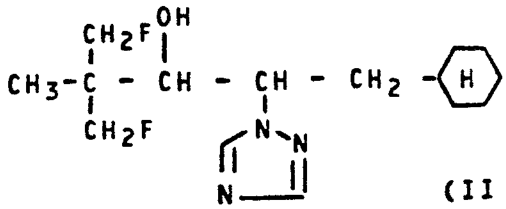

(II b-8)

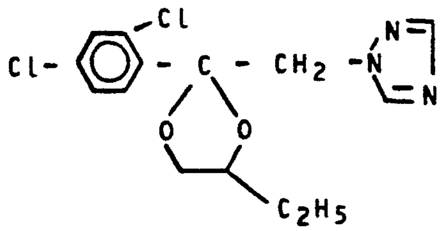

(II b-9)

Aus der Gruppe ($A_3$):

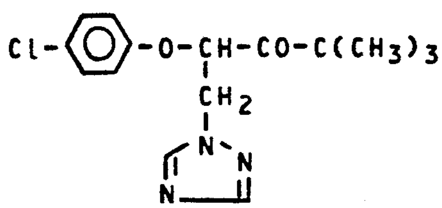

(II c-1)

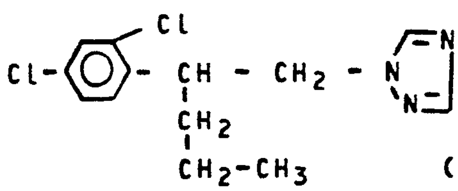

(II c-2)

Aus der Gruppe ($A_4$):

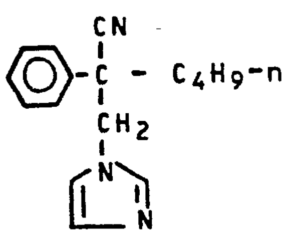

(II d-1)

Aus der Gruppe ($A_4$):

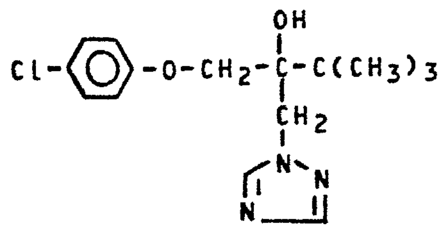

(II d-2)

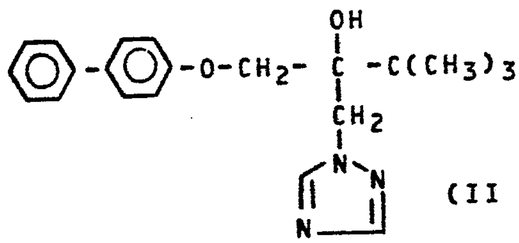

(II d-3)

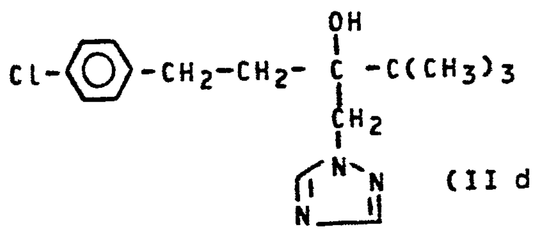

(II d-4)

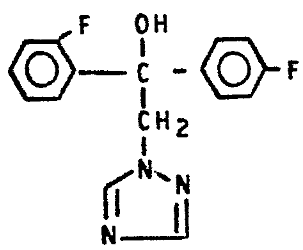

(IId-5)

Aus der Gruppe ($A_5$):

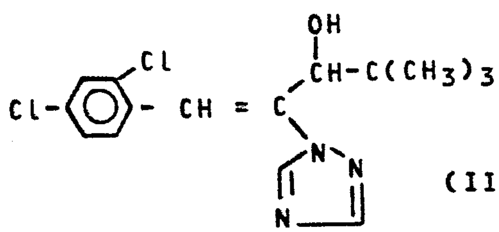

(II e-1)

Aus der Gruppe ($A_5$):

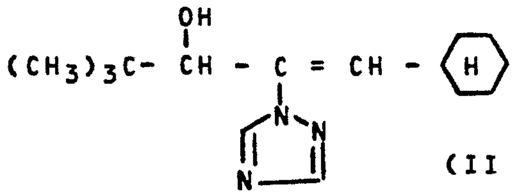

(II e-2)

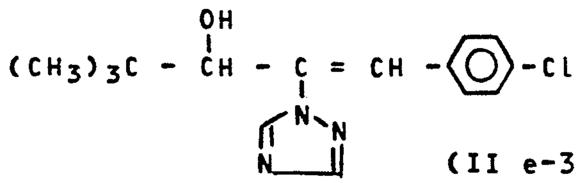

(II e-3)

Aus der Gruppe ($A_6$):

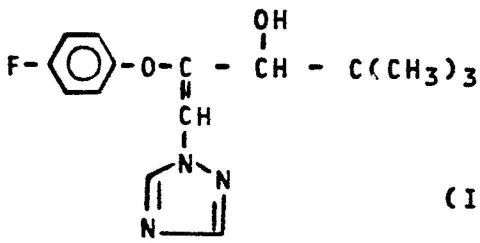

(II f-1)

Aus der Gruppe ($A_7$):

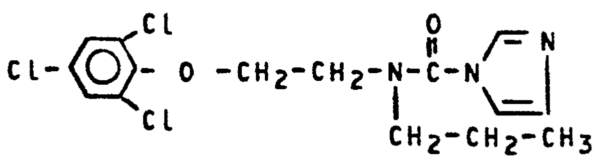

(II g-1)

Aus der Gruppe (B)

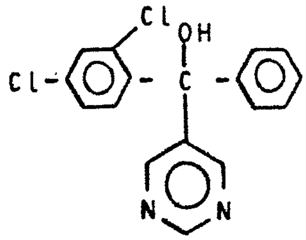

(III-1)

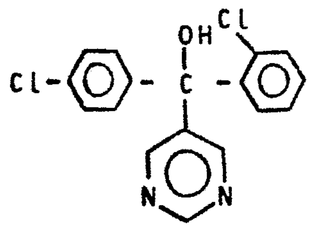

(III-2)

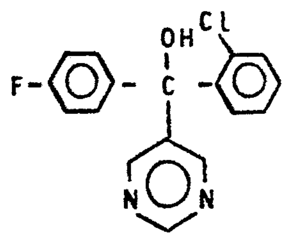

(III-3)

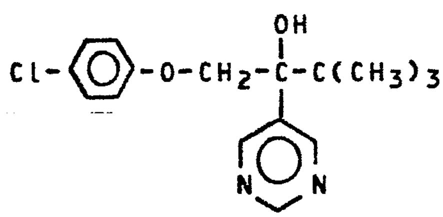

(III-4)

Aus der Gruppe (C):

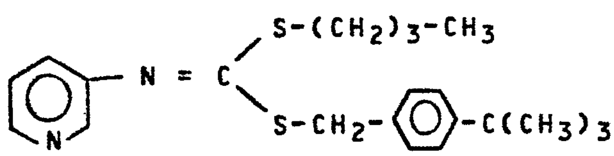

(IV-1)

und aus der Gruppe (D):

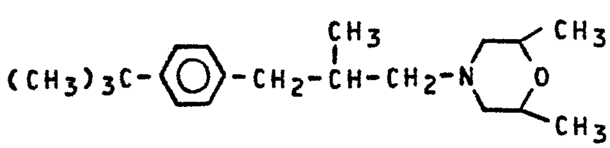

(V-1 )

Die Gewichtsverhältnisse der Wirkstoffgruppen in den Wirkstoffkombinationen können in relativ großen Bereichen schwanken. Im allgemeinen entfallen auf 1 Gewichtsteil an Verbindung der Formel (I) 0,01 bis 50 Gewichtsteile an Wirkstoff aus den Wirkstoffklassen (A) bis (D), vorzugsweise 0,02 bis 20 Gewichtsteile, besonders bevorzugt sind 0,5 bis 5 Gewichtsteile der letzten Gruppe pro Gewichtsteil an Verbindung der Formel (I).

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffkombinationen sind für den Gebrauch als Pflanzenschutzmittel geeignet, vor allem als Fungizide.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besondere praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäule, Stengel-, Halm-, Blatt-, Blüten-, Frucht- und Samenkrankheiten, die insbesondere durch Tilletia-, Urocystis-, Ustilago-, Septoria-, Typhula-, Rhynchosporium-, Helminthosphorium- und Fusarium-Arten hervorgerufen werden. Durch die systemische Wirkung des einen Mischungspartners werden die Pflanzen auch oft längere Zeit nach der Beizung noch vor Krankheitserregern geschützt, die verschiedene Teile des Sprosses angreifen können, z.B. Erysiphe graminis und Puccinia-Arten. Die Wirkstoffkombinationen können auch als Bodenbehandlungsmittel gegen phytopathogene Pilze eingesetzt werden und wirken gegen Wurzelfäule und Tracheomykosen, die z.B. durch Krankheitserreger der Gattung Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten,

Pyricularia oryzae, Pellicularia sasakii, Fusarium-Arten, Pyrenophora-Arten, Cochliobolus-Arten, Septoria-Arten und Pseudocercosporella herpotrichoides.

In entsprechenden Aufwandmengen zeigen die erfindungsgemäßen Wirkstoffkombinationen auch insektizide, akarizide, insektenentwicklungshemmende, bakterizide und pflanzenwachstumsregulierende Wirkung.

Die Wirkstoffkombinationen können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkyl-naphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe wie Butan, Propan, Stickstoff und Kohlenstoffdioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material, wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäureester, Polyoxyethylen-Fettalkohol-ether, z.B. Alkylarylpolyglykol-ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- oder Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffkombinationen können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Zur Erläuterung dienen die nachfolgenden Anwendungsbeispiele.

Um Synergismus zwischen den in den folgenden Versuchen verwendeten Wirkstoffen aufzuzeigen, wurden die Resultate nach der von R.S. Colby beschriebenen Methode (Calculating Synergistic and Antagonistic Responses of Herbicides

Combinations; Weeds 15, 20-22, 1967) ausgewertet. Der erwartete Befall in % der unbehandelten Kontrolle wurde gemäß der Gleichung

$$E = \frac{X \cdot Y}{100}$$

berechnet. Dabei bedeutet X bzw. Y den Krankheitsbefall - ausgedrückt in % der unbehandelten Kontrolle -, den die beiden Präparate bei einer getrennten Anwendung zulassen. Ein synergistischer Effekt liegt vor, wenn die fungizide Wirkung der Wirkstoffkombination größer ist als die der einzeln applizierten Wirkstoffe. In diesem Fall muß der tatsächlich beobachtete Befall geringer sein als der aus der oben angeführten Formel errechnete Wert für den erwarteten Befall (E).

Beispiel A

Pyrenophora teres-Test (Gerste) / protektiv

Lösungsmittel: 100 Gewichtsteile Dimethylformamid
Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspension von Pyrenophora teres besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 20°C und einer relativen Luftfeuchtigkeit von ca. 80 % aufgestellt.

7 Tage nach der Inokulation erfolgt die Auswertung.

Tabelle A

Pyrenophora teres-Test (Gerste) /protektiv

| Wirkstoff | Wirkstoffkonzentration in der Spritzbrühe in Gew.-% | Krankheitsbefall in % der unbehandelten Kontrolle |
| --- | --- | --- |
| 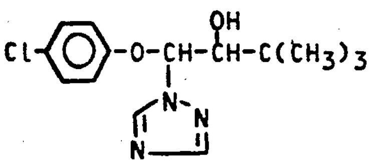 (bekannt) (IIb-2) | 0,005 | 25,0 |
| 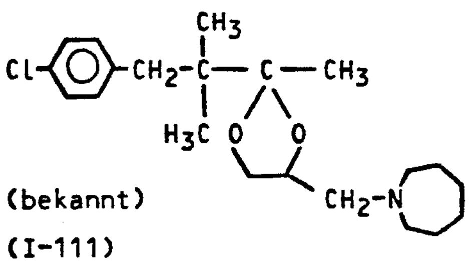 (bekannt) (I-111) | 0,005 | 57,5 |
| 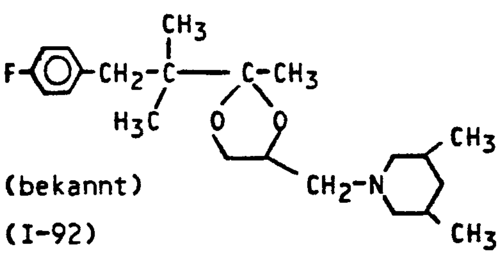 (bekannt) (I-92) | 0,005 | 42,5 |
| 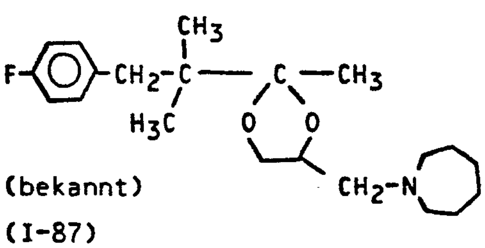 (bekannt) (I-87) | 0,005 | 50,0 |

**T a b e l l e A (Fortsetzung)**

Pyrenophora teres-Test (Gerste) /protektiv

| W i r k s t o f f | Wirkstoffkonzentration in der Spritzbrühe in Gew.-% | beobachteter Befall nach Anwendung der Mischung | erwarteter Befall(E) nach Anwendung der Mischung |
|---|---|---|---|
| | | in % der unbehandelten Kontrolle | |
| Mischung: | | | |
| (IIb-2) + (I-111) = 1 : 1 | 0,005 + 0,005 | 0,0 | 14,4 |
| (IIb-2)+ (I-92) = 1 : 1 | 0,005 + 0,005 | 0,0 | 10,6 |
| (IIb-2) + (I-87) = 1 : 1 | 0,005 + 0,005 | 0,0 | 12,5 |

Beispiel B

Venturia-Test (Apfel) / protektiv

Lösungsmittel: 4,7 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20°C und 100 % relativer Luftfeuchtigkeit in einer Inkubationskabine.

Die Pflanzen werden dann im Gewächshaus bei 20°C und einer relativen Luftfeuchtigkeit von ca. 70 % aufgestellt.

12 Tage nach der Inokulation erfolgt die Auswertung.

Tabelle B

Venturia-Test (Apfel) / protektiv

| Wirkstoff | Befall in % bei einer Wirkstoffkonzentration von 0,5 ppm |
|---|---|
| 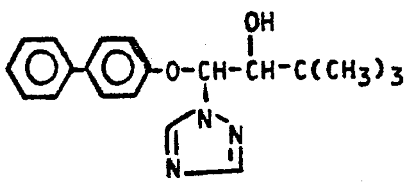 (bekannt) (IIb-3) | 74 |
| 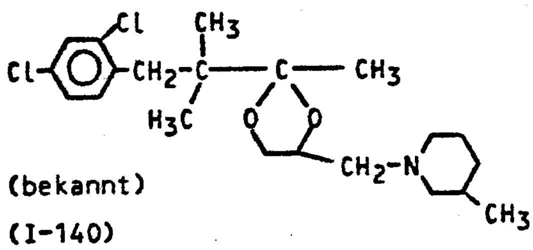 (bekannt) (I-140) | 81 |
| 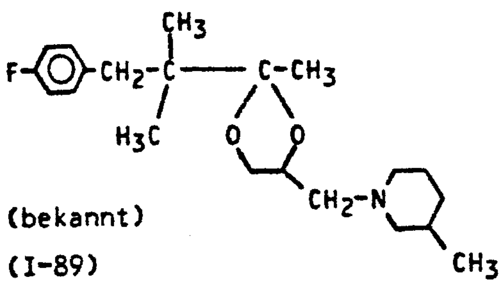 (bekannt) (I-89) | 74 |
| Mischung: (IIb-3) + (I-140) = 1 : 1 (0,5ppm + 0,5ppm) | 35 |
| Mischung: (IIb-3) + (I-89) = 1 : 1 (0,5ppm + 0,5ppm) | 18 |

Herstellungsbeispiele

Beispiel (I-1)

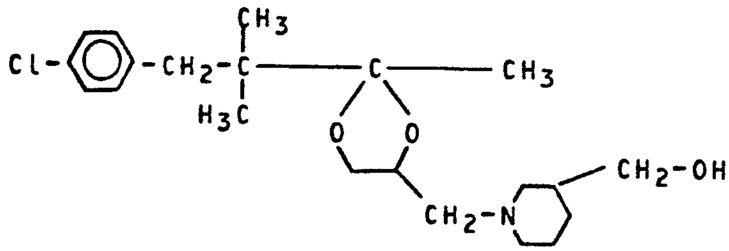

Man erhitzt 30,3 g (0,1 Mol) 4-Chlormethyl-2-/1-(4-chlorphenyl)-2-methyl-prop-2-yl7-2-methyl-1,3-dioxolan, 23 g (0,2 Mol) 3-Hydroxymethylpiperidin und 0,1 g Kaliumiodid in 100 ml Ethanol 15 Stunden lang unter Druck (2 bar) auf 150°C. Zur Aufarbeitung entfernt man das Lösungsmittel im Vakuum, nimmt den Rückstand in 100 ml Methylenchlorid auf, wäscht zweimal mit je 100 ml Wasser, trocknet über Natriumsulfat und entfernt wiederum das Lösungsmmittel im Vakuum.

Man erhält 38 g (100 % der Theorie) an 2-/1-(4-(Chlorphenyl)-2-methyl-prop-2-yl7-4-/(3-hydroxymethylpiperidin-1-yl)-2-methyl7-1,3-dioxolan vom Brechnungsindex $n_D^{20}$ = 1,5226.

Beispiel (I-2)

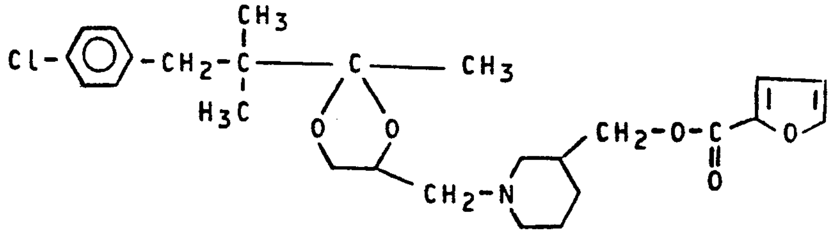

6,9 g (0,018 Mol) 2-[1-(4-Chlorphenyl)-2-methyl-prop-2-yl]-4-[(3-hydroxymethylpiperidin-1-yl)-methyl]-2-methyl-1,3-dioxolan in 70 ml Dichlormethan werden bei Raumtemperatur unter Rühren mit 2,4 g (0,0181 Mol) Furan-2-carbonsäurechlorid versetzt und weitere 2 Stunden gerührt. Zur Aufarbeitung setzt man 50 ml gesättigte Natriumhydrogencarbonatlösung zu, trennt die organische Phase ab, extrahiert die wäßrige Phase noch zweimal mit je 50 ml Dichlormethan, trocknet die vereinigten Dichlormethanphasen über Natriumsulfat und entfernt das Lösungsmittel im Vakuum.

Man erhält 6 g (70 % der Theorie) an 2-[1-(4-Chlorphenyl)-2-methyl-prop-2-yl]-4-(furyl-2-carbonyloxymethyl)-piperidin-1-yl-methyl]-2-methyl-1,3-dioxolan als Öl.

$^1H$-NMR ($CDCl_3$): $\delta$ = 4,17 ppm (d, 2H) entspricht der $-CH_2-O-\underset{O}{\underset{\|}{C}}-$Gruppe.

Herstellung des Ausgangsproduktes

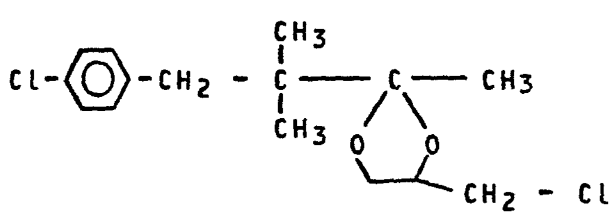

60 g (0,285 Mol) 4-(4-Chlorphenyl)-3,3-dimethylbutan-2-on, 63 g (0,57 Mol) 3-Chlorpropan-1,2-diol und 5,4 g (0,0285 Mol) p-Toluolsulfonsäure werden in einem Gemisch aus 500 ml Toluol und 100 ml n-Butanol 15 Stunden lang über einen Wasserabscheider am Rückfluß erhitzt. Anschließend wird das Lösungsmittel im Wasserstrahlvakuum abdestilliert und der Rückstand im Hochvakuum feindestilliert.

Nach zweimaliger Destillation erhält man 69 g (80 % der Theorie) an 4-Chlormethyl-2-/1-(4-chlorphenyl)-2-methyl-prop-2-yl7-methyl-1,3-dioxolan vom Siedepunkt 155°C bei 0,267 mbar als cis-trans-Gemisch.

In entsprechender Weise und gemäß den allgemeinen Herstellungsangaben erhält man die folgenden Verbindungen der allgemeinen Formel (Ia), in der Y in der Formel (I) für Sauerstoff steht:

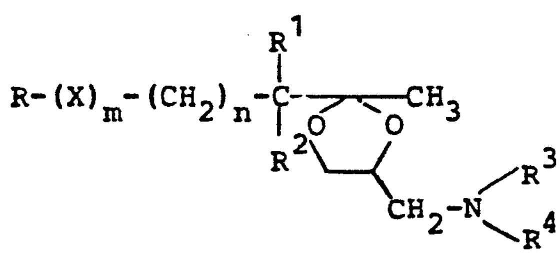

| Bsp. Nr. | 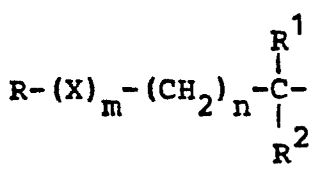 | 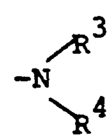 | Physikalische Konstanten /Brechungsindex: $n_D^{20}$ Siedepunkt: °C/mbar7 |
|---|---|---|---|
| (I-3) | 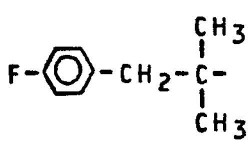 | 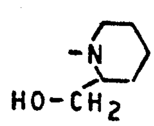 | 1,5173 |

| Bsp. Nr. | 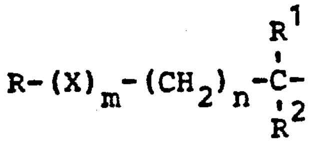 | 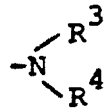 | Physikalische Konstanten /Brechungsindex: $n_D^{20}$ Siedepunkt: °C/mbar/ |
|---|---|---|---|
| (I-4) | 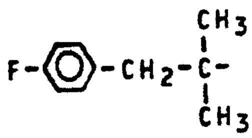 | 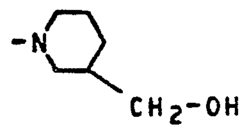 | 1,5123 |
| (I-5) | 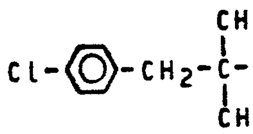 | 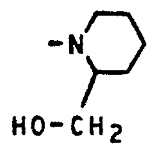 | 1,5269 |
| (I-6) | 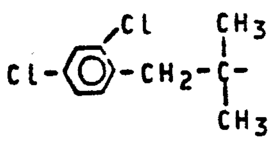 | 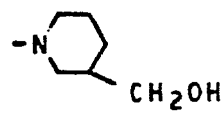 | 1,5308 |
| (I-7) | 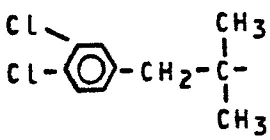 | 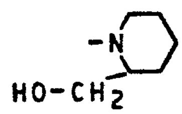 | 1,5361 |
| (I-8) | 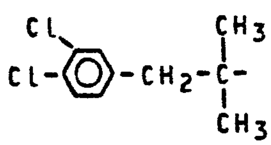 | 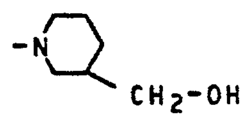 | 1,5362 |
| (I-9) | 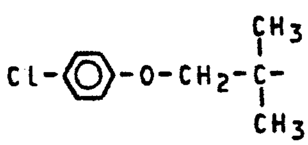 | 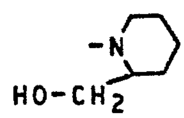 | 1,5249 |
| (I-10) | 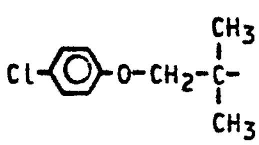 | 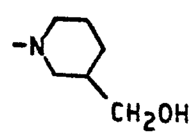 | 1,5196 |
| (I-11) | 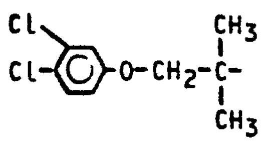 | 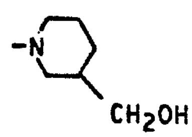 | 1,5114 |

| Bsp. Nr. | $R-(X)_m-(CH_2)_n-\overset{R^1}{\underset{R^2}{C}}-$ | $-N\begin{smallmatrix}R^3\\R^4\end{smallmatrix}$ | Physikalische Konstanten /Brechungsindex: $n_D^{20}$ Siedepunkt: °C/mbar/ |
|---|---|---|---|
| (I-12) | 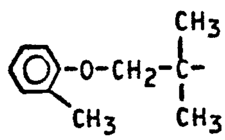 | 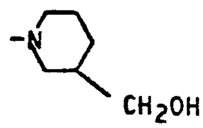 | Oel |
| (I-13) | 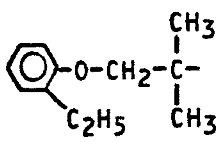 | 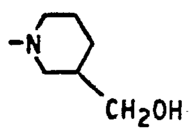 | 1,5041 |
| (I-14) | 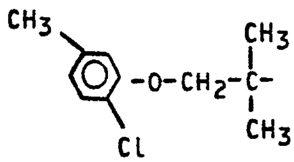 | 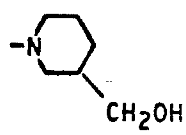 | 1,5112 |
| (I-15) | 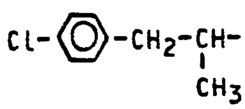 | 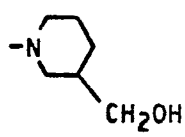 | 1,5273 |
| (I-16) | 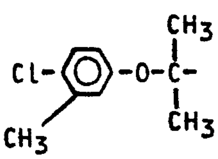 | 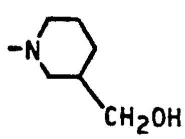 | 250/0,1 |
| (I-17) | 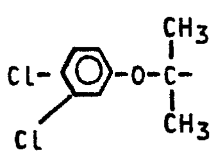 | 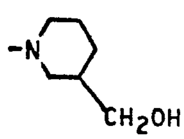 | 250/0,1 |

| Bsp. Nr. | 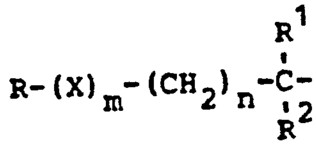 | 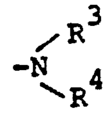 | Physikalische Konstanten [Brechungsindex: $n_D^{20}$ Siedepunkt: °C/mbar] |
|---|---|---|---|
| (I-18) | 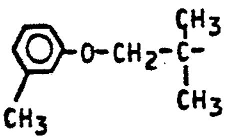 | 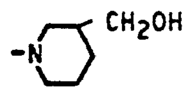 | 200/0,1 |
| (I-19) | 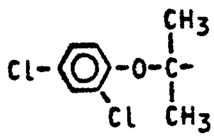 | 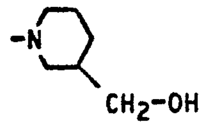 | 250/0,1 |
| (I-20) | 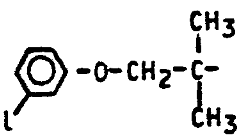 | 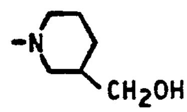 | 200/0,1 |
| (I-21) | 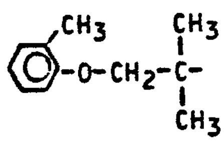 | 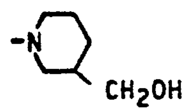 | Oel |
| (I-22) | 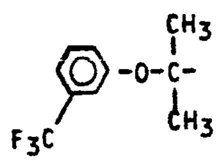 | 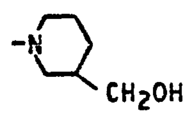 | 1,4810 |
| (I-23) | 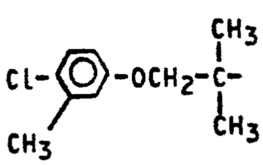 | 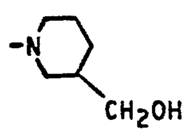 | Oel |

Beispiel
(I-24):

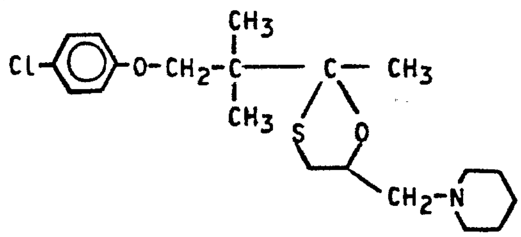

10 g (0,03 Mol) 5-Chlormethyl-2-/1-(4-chlorphenoxy)-2-methyl7-prop-2-yl-methyl-1,3-oxathiolan und 10 g (0,12 Mol) Piperidin werden 12 Stunden auf 120°C erhitzt. Nach dem Erkalten wird das Reaktionsgemisch mit Essigester verdünnt, zweimal mit Wasser gewaschen, über Natriumsulfat getrocknet und im Vakuum eingeengt. Der Rückstand wird einer Kugelrohrdestillation unterzogen (Kp: ~ 200°C/ 0,13 mbar) oder über eine Kieselgel-Säule mit einem Laufmittelgemisch aus Petrolether/Essigester = 2:1 chromatographiert.

Man erhält 8 g (69,5 % der Theorie) an 2-/1-(4-Chlorphenoxy)-2-methyl7-prop-2-yl-methyl-5-piperidin-1-ylmethyl-1,3-oxathiolan vom Brechungsindex $n_D^{20}$ = 1,5440.

In entsprechender Weise und gemäß den allgemeinen Angaben zur Herstellung erhält man die nachfolgend aufgeführten Verbindungen der allgemeinen Formel (Ib), in der Y in der Formel (I) für Schwefel steht:

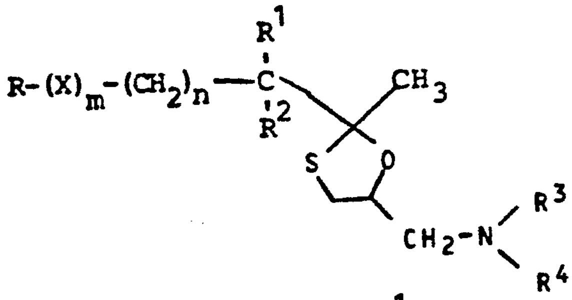

(Ib)

| Bsp. Nr. | 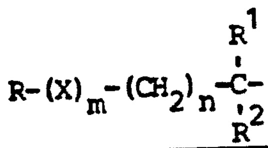 | 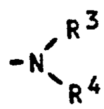 | Brechungs-index [$n_D^{20}$:] |
|---|---|---|---|
| (I-25) | 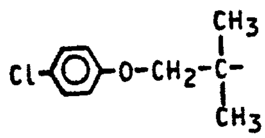 | 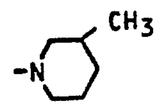 | 1,5382 |
| (I-26) | 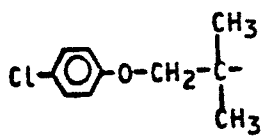 | 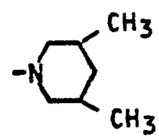 | 1,5331 |
| (I-27) | 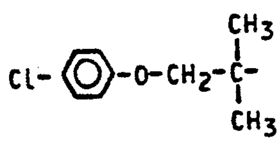 | 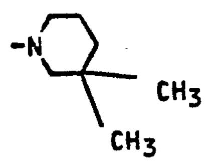 | 1,5357 |
| (I-28) | 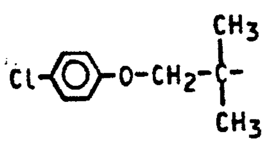 | 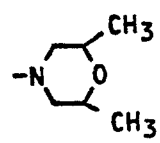 | 1,5341 |
| (I-29) | 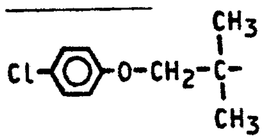 | 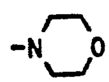 | 1,5039 |
| (I-30) | 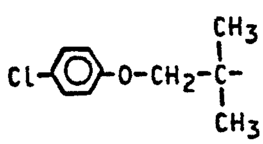 | 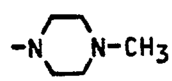 | 1,5065 |
| (I-31) | 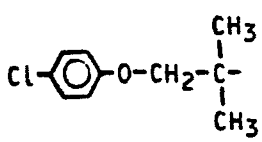 | 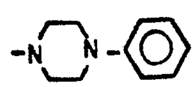 | 1,5147 |

| Bsp. Nr. | $R-(X)_m-(CH_2)_n-\overset{R^1}{\underset{R^2}{C}}-$ | $-N\genfrac{}{}{0pt}{}{R^3}{R^4}$ | Brechungsindex [$n_D^{20}$:] |
|---|---|---|---|
| (I-32) | 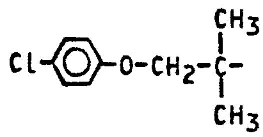 | 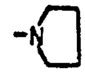 | 1,5007 |
| (I-33) | 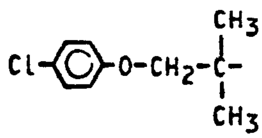 | 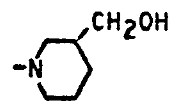 | 1,5077 |
| (I-34) | 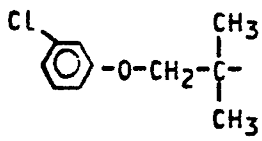 | 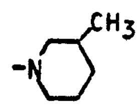 | 1,5082 |
| (I-35) | 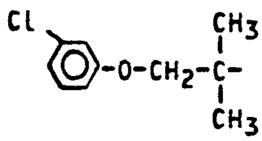 | 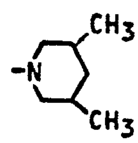 | 1,5049 |
| (I-36) | 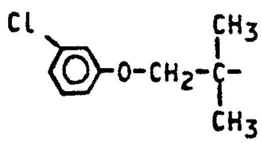 | 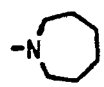 | 1,5058 |
| (I-37) | 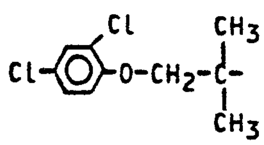 | 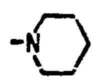 | 1,5091 |
| (I-38) | 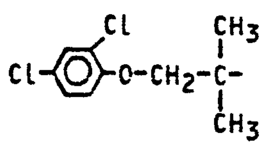 | 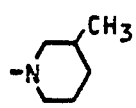 | 1,5077 |
| (I-39) | 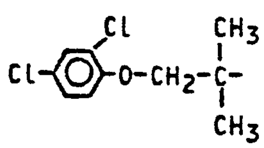 | 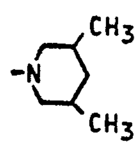 | 1,5069 |
| (I-40) | 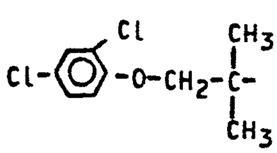 | 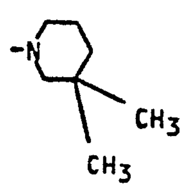 | 1,5087 |

| Bsp. Nr. | $R-(X)_m-(CH_2)_n-C(R^1)(R^2)-$ | $-N(R^3)(R^4)$ | Brechungsindex [$n_D^{20}$:] |
|---|---|---|---|
| (I-41) | 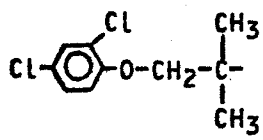 | 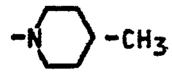 | 1,5083 |
| (I-42) | 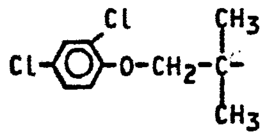 | 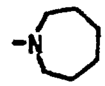 | 1,5110 |
| (I-43) | 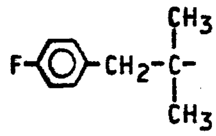 | 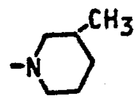 | 1,5245 |
| (I-44) | 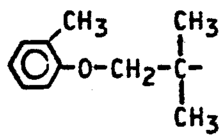 | 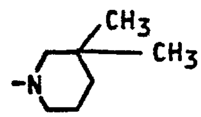 | 1,5070 |
| (I-45) | 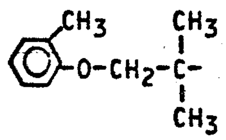 | 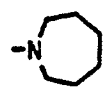 | 1,5062 |
| (I-46) | 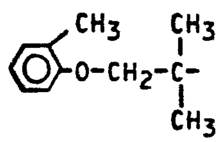 | 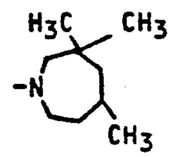 | 1,5078 |
| (I-47) | 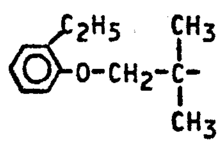 | 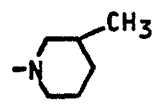 | 1,5122 |
| (I-48) | 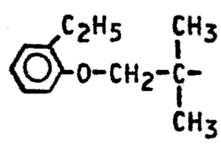 | 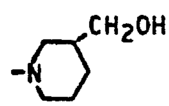 | 1,5047 |
| (I-49) | 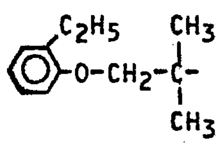 | 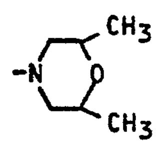 | 1,5086 (cis-Form) |

| Bsp. Nr. | 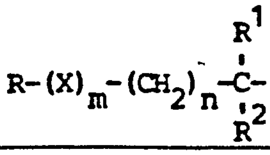 | 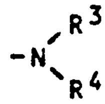 | Brechungsindex $n_D^{20}$; Fließpunkt °C |
|---|---|---|---|
| (I-50) | 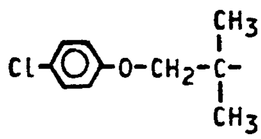 | 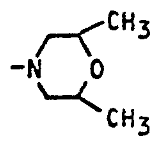 | 1,5039 (cis-Form) |
| (I-51) | 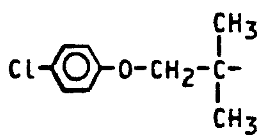 | 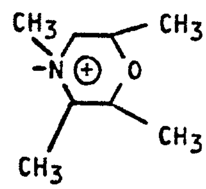 $I^{\ominus}$ | 179-180 |
| (I-52) | 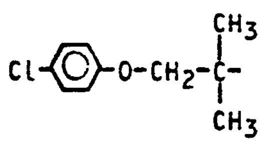 | 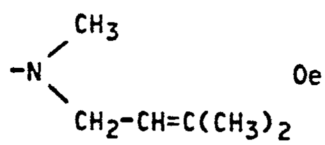 | Oel |
| (I-53) | 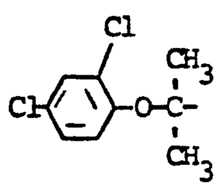 | 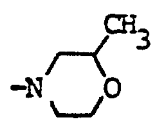 | |

Beispiel (I-54):

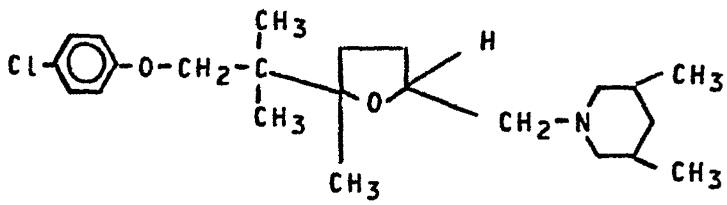

16 g (0,044 Mol) 2-Brommethyl-5-/1-(4-chlorphenoxy)-2-methyl-prop-2-yl/-5-methyl-tetrahydrofuran werden zusammen mit 11 g (0,097 Mol) cis-3,5-Dimethylpiperidin circa 14 Stunden bei einer Badtemperatur von 140°C gerührt. Die erhaltene Reaktionsmischung wird in Ether aufgenommen, mehrfach mit Wasser gewaschen, über Natriumsulfat getrocknet und im Vakuum eingeengt. Der ölige Rückstand wird säulenchromatographisch (Kieselgel 60 / Ether-Petrolether 1:1) gereinigt. Man erhält 7,8 g (45 % der Theorie) an 5-/1-(4-Chlorphenoxy)-2-methyl-prop-2-yl/-2-(cis)-(3,5-dimethylpiperidin-1-ylmethyl)-5-methyl-tetrahydrofuran vom Brechungsindex $n_D^{20}$ = 1,5049.

Herstellung der Ausgangsverbindung

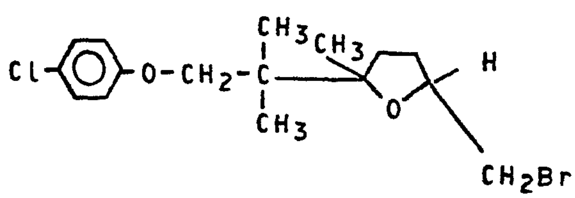

28,2 g (0,1 Mol) 7-(4-Chlorphenoxy)-5-hydroxy-5,6,6-trimethyl-hept-1-en in 200 ml absolutem Chloroform werden unter Rühren bei Raumtemperatur tropfenweise mit 16 g (0,1 Mol) Brom und danach bei -10°C unter Kühlung mit

13 g (0,1 Mol) Chinolin versetzt. Die Reaktionsmischung wird weitere 2 Stunden bei Raumtemperatur gerührt, im Vakuum eingeengt, in Ether aufgenommen, filtriert, wiederum im Vakuum eingeengt und 1 Stunde im Wasserbad bei 95°C gerührt. Die erhaltene Mischung wird in Ether aufgenommen, filtriert, mit 15 %iger Salzsäure und danach mit Wasser gewaschen, über Natriumsulfat getrocknet und im Vakuum vom Lösungsmittel befreit. Man erhält 32,7 g (90 % der Theorie) an 2-Brommethyl-5-/1-(4-chlorphenoxy)-2-methylprop-2-yl7-5-methyl-tetrahydrofuran als Öl, welches ohne weitere Reinigung in die nächste Stufe eingesetzt werden kann.

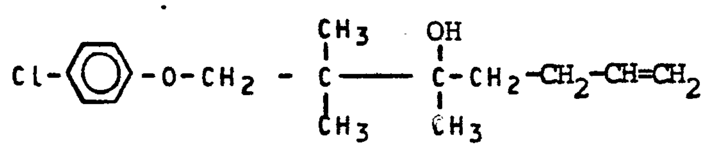

Zu einer Grignard-Lösung aus 7,2 g (0,3 Mol) Magnesium und 36 g Allylbromid in 300 ml absolutem Ether tropft man unter Rühren und Eiskühlung eine Lösung von 48 g (0,2 Mol) 2-/1-(4-Chlorphenoxy)-2-methylprop-2-yl7-2-methyl-oxiran in 100 ml absolutem Tetrahydrofuran, erhitzt nach beendeter Zugabe für 4 Stunden auf Rückflußtemperatur und rührt 15 Stunden bei Raumtemperatur nach. Zur Aufarbeitung hydrolysiert man mit wäßriger Ammoniumchloridlösung, trennt die organische Phase ab, trocknet über Natriumsulfat, entfernt das Lösungsmittel im Vakuum und destilliert den Rückstand im Hochvakuum.

Man erhält 43 g (51 % der Theorie) an 7-(4-Chlorphenoxy)-5-hydroxy-5,6,6-trimethyl-hept-1-en vom Siedepunkt 128°C-130°C/0,13 mbar.

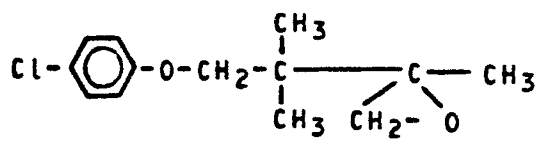

Eine Suspension von 72 g (0,33 Mol) Trimethylsulfoxoniumchlorid in 71 g (0,3 Mol) absolutem Dimethylsulfoxid werden innerhalb von 10 Minuten mit 70,2 g (0,33 Mol) Natriummethylat versetzt, dann mit 100 ml absolutem Tetrahydrofuran verdünnt, drei Stunden bei Raumtemperatur nachgerührt und dann tropfenweise mit 68 g (0,3 Mol) 1-(4-Chlorphenoxy)-2,2-dimethyl-butan-3-on in 50 ml absolutem Tetrahydrofuran versetzt. Nach beendeter Zugabe rührt man 2 Tage bei Raumtemperatur, filtriert den ausgefallenen Feststoff ab, engt das Filtrat im Vakuum ein, löst den Rückstand in 300 ml Dichlormethan, wäscht mehrmals mit insgesamt 200 ml Wasser, trocknet über Natriumsulfat und entfernt das Lösungsmittel im Vakuum. Man erhält 62 g (86 % der Theorie) an 2-/1-(4-Chlorphenoxy)-2-methyl-prop-2-yl/-1-methyl-oxiran als Öl, welches ohne weitere Reinigung in die nächste Stufe eingesetzt werden kann.

In entsprechender Weise und gemäß den allgemeinen Herstellungsangaben wurden die folgenden Verbindungen der

Formel (Ic) erhalten, in denen Y in der Formel (I) für die Methylengruppe steht:

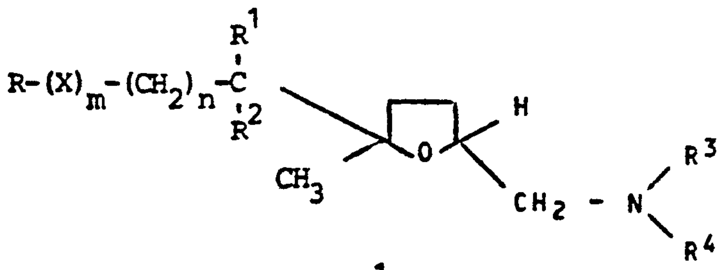

(Ic)

| Bsp.Nr. | 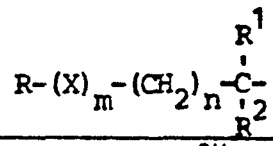 | 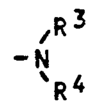 | physikal. Konst. |
|---|---|---|---|
| (I-55) | 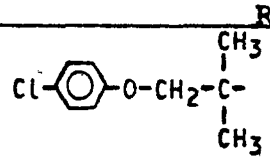 | 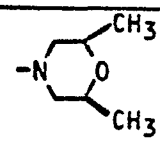 | $n_D^{20}$= 1,5059 (cis-Form) |
| (I-56) | 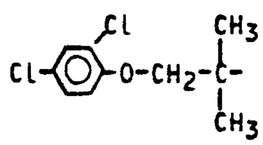 | 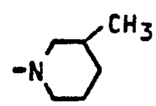 | $n_D^{20}$1,5114 |
| (I-57) | 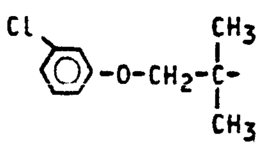 | 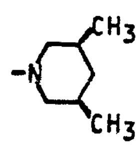 | $n_D^{20}$= 1,5389 (cis-Form) |
| (I-58) | 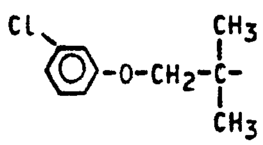 | 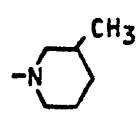 | $n_D^{20}$ = 1,5374 |
| (I-59) | 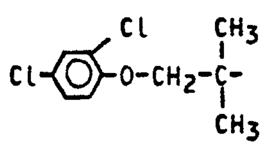 | 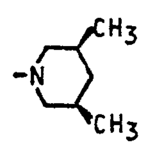 | $n_D^{20}$= 1,5129 (cis-Form) |

In entsprechender Weise erhält man auch die folgenden Verbindungen der Formel (Id), in welcher Y in Formel (I) für Sauerstoff steht:

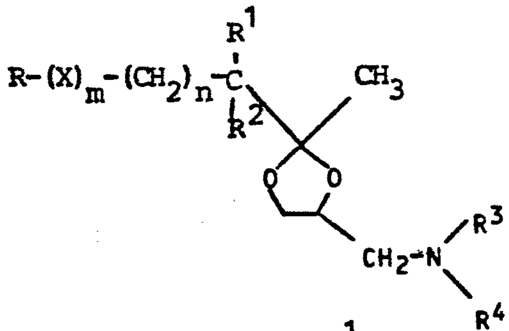

(Id)

| Bsp.Nr. | 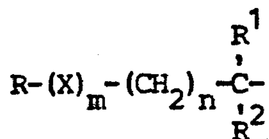 | 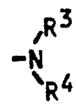 | physikal. Konstante |
|---|---|---|---|
| (I-60) | 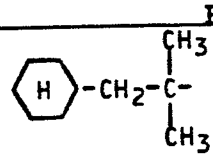 | 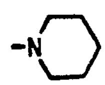 | $n_D^{20}$ 1.4853 |
| (I-61) | 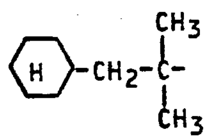 | 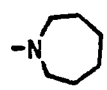 | |
| (I-62) | 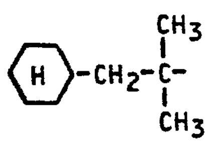 | 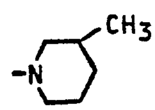 | $n_D^{20}$ 1.4825 |
| (I-63) | 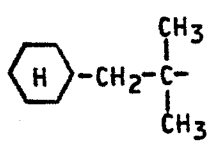 | 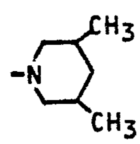 | $n_D^{20}$ 1.4811 |

| Bsp.Nr. | 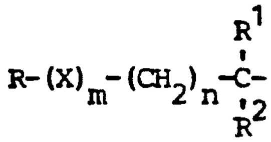 | 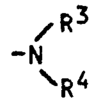 | physikal. Konstante |
|---|---|---|---|
| (I-64) | 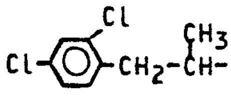 | 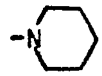 | $n_D^{20}$ =1,5195 |
| (I-65) | 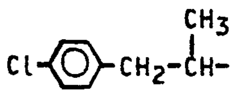 | 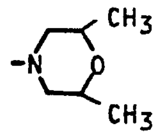 | $n_D^{20}$=1,5123 |
| (I-66) | 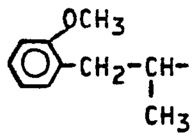 | 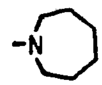 | |
| (I-67) | 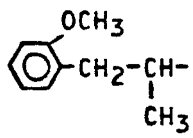 | 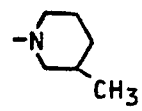 | |
| (I-68) | 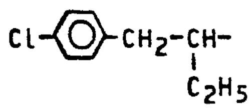 | 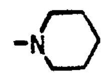 | |
| (I-69) | 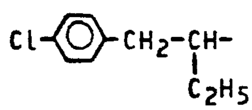 | 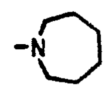 | |
| (I-70) | 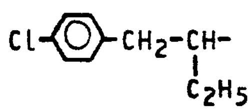 | 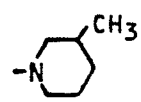 | |
| (I-71) | 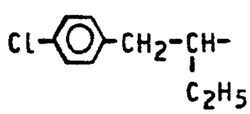 | 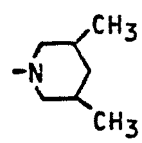 | |
| (I-72) | 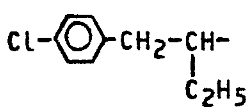 | 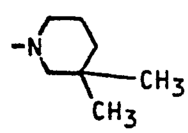 | |
| (I-73) | 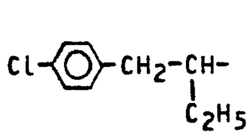 | 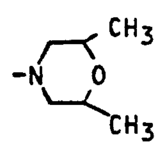 | |
| (I-74) | 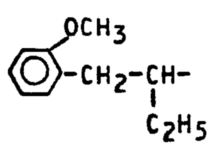 | 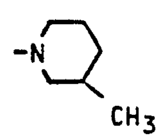 | |

| Bsp.Nr. | 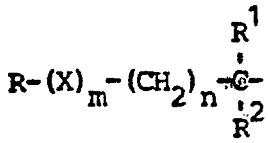 | 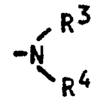 | physikal. Konstante |
|---|---|---|---|
| (I-75) | 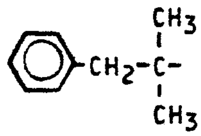 | 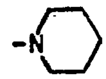 | $n_D^{20}$=1,5091 |
| (I-76) | 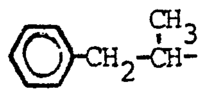 | 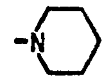 | |
| (I-77) | 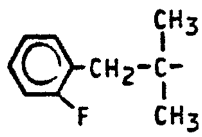 | 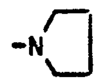 | $n_D^{20}$ = 1,5086 |
| (I-78) | 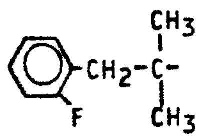 | 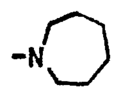 | $n_D^{20}$=1,5077 |
| (I-79) | 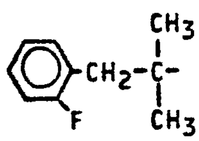 | 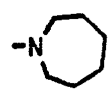 | $n_D^{20}$=1,5108 |
| (I-80) | 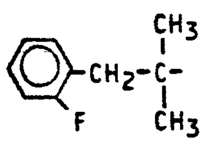 | 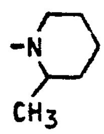 | $n_D^{20}$=1,5070 |
| (I-81) | 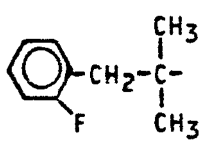 | 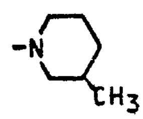 | $n_D^{20}$=1,5028 |
| (I-82) | 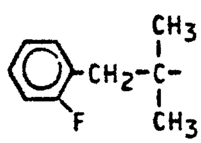 | 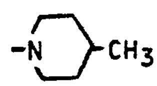 | $n_D^{20}$=1,5035 |
| (I-83) | 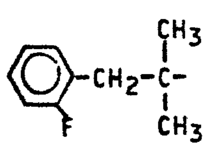 | 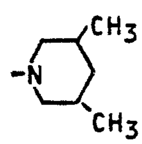 | $n_D^{20}$ =1,4978 |
| (I-84) | 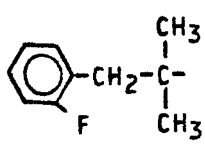 | 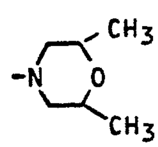 | $n_D^{20}$=1,4996 |
| (I-85) | 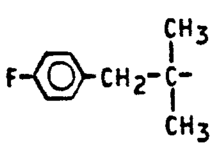 | 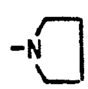 | $n_D^{20}$=1,5069 |

| Bsp.Nr. | 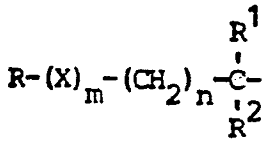 | 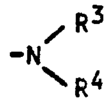 | Physikal. Konstante /Brechungsindex: $n_D^{20}$ _7 |
|---|---|---|---|
| (I-86) | 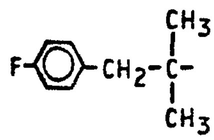 | 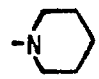 | 1,5061 |
| (I-87) | 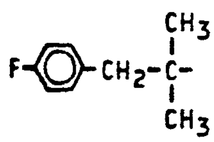 | 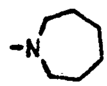 | 1,5086 |
| (I-88) | 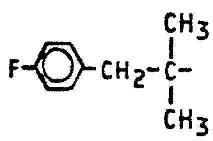 | 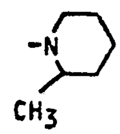 | 1,4929 |
| (I-89) | 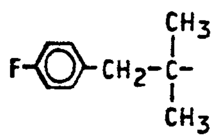 | 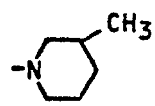 | 1,5018 |
| (I-90) | 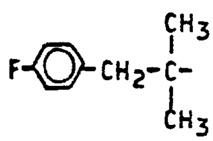 | 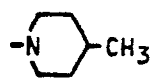 | 1,5003 |
| (I-91) | 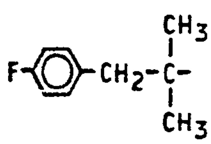 | 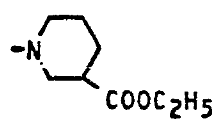 | 1,5070 |
| (I-92) | 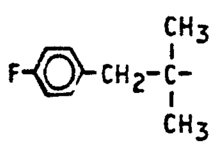 | 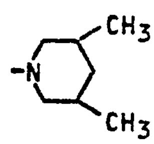 | 1,4952 |
| (I-93) | 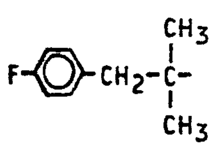 | 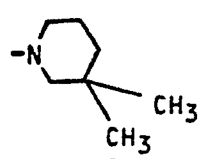 | 1,4986 |
| (I-94) | 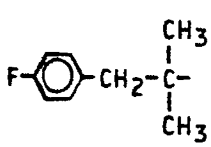 | 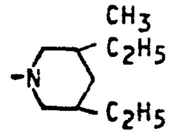 | 1,5577 |
| (I-95) | 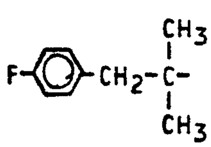 | 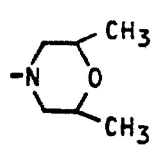 | 1,4959 |

| Bsp.Nr. | $R-(X)_m-(CH_2)_n-C(R^1)(R^2)-$ | $-N(R^3)(R^4)$ | physikal. Konstante [Brechungsindex $n_D^{20}$] |
|---|---|---|---|
| (I-96) | 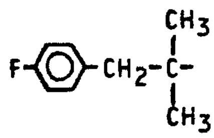 | 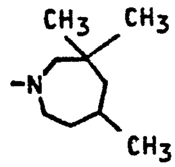 | 1,5002 |
| (I-97) | 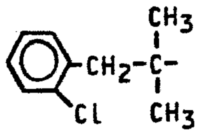 | 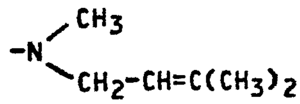 | |
| (I-98) | 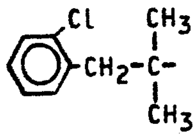 | 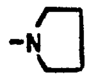 | 1,5269 |
| (I-99) | 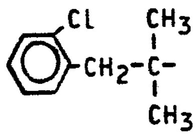 | 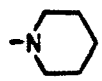 | 1,5239 |
| (I-100) | 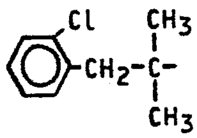 | 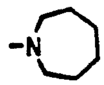 | 1,5272 |
| (I-101) | 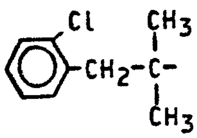 | 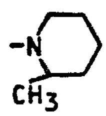 | 1,5241 |
| (I-102) | 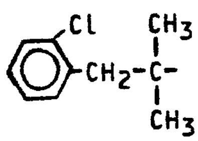 | 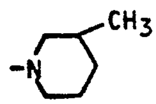 | 130 |
| (I-103) | 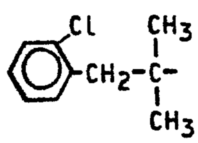 | 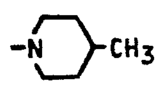 | 1,5193 |
| (I-104) | 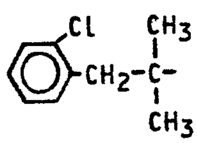 | 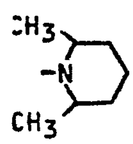 | 1,5375 |
| (I-105) | 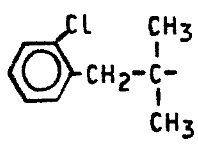 | 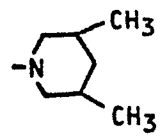 | 1,5162 |

| Bsp.Nr. | 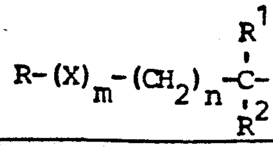 | 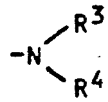 | physikal. Konstante /Brechungsindex $n_D^{20}$/ |
|---|---|---|---|
| (I-106) | 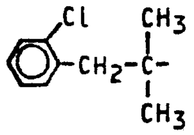 | 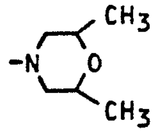 | 1,5208 |
| (I-107) | 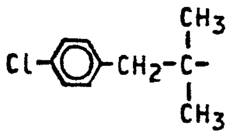 | 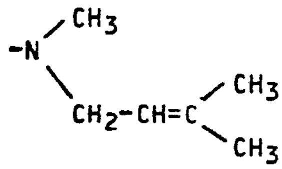 | |
| (I-108) | 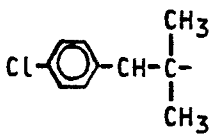 | 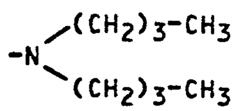 | |
| (I-109) | 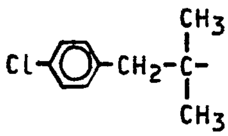 | 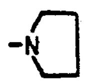 | 1,5261 |
| (I-110) | 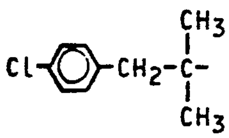 | 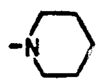 | 1,5244 |
| (I-111) | 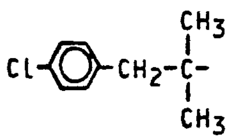 | 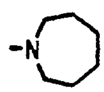 | 1,5269 |
| (I-112) | 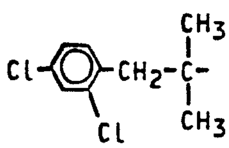 | 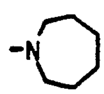 | 1,5341 |
| (I-113) | 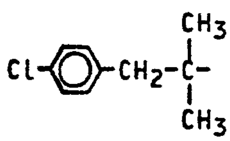 | 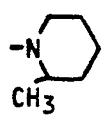 | 1,5209 |
| (I-114) | 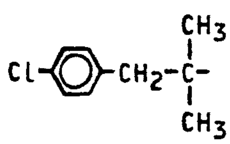 | 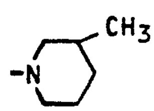 | 1,5185 |
| (I-115) | 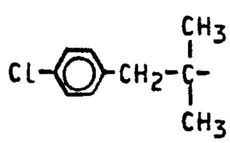 | 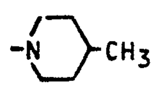 | 1,5170 |

| Bsp.Nr. | $R-(X)_m-(CH_2)_n-\overset{R^1}{\underset{R^2}{C}}-$ | $-N\begin{smallmatrix}R^3\\R^4\end{smallmatrix}$ | physikal. Konstante /Brechungsindex $n_D^{20}$:7 |
|---|---|---|---|
| (I-116) | 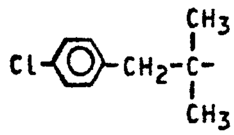 | 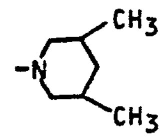 | 1,5034 |
| (I-117) | 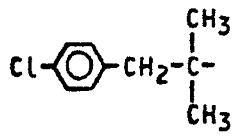 | 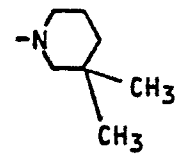 | 1,5154 |
| (I-118) | 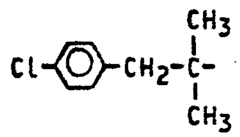 | 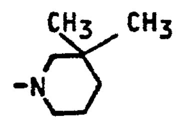 | 1,5249 |
| (I-119) | 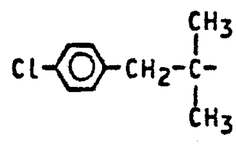 | 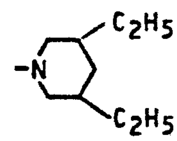 | 1,4982 |
| (I-120) | 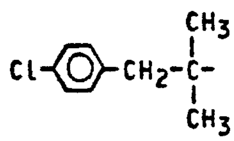 | 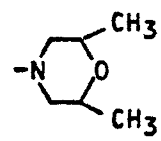 | 1,5154 |
| (I-121) | 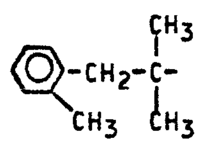 | 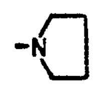 | 1,5189 |
| (I-122) | 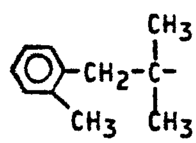 | 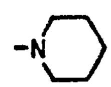 | 1,5177 |
| (I-123) | 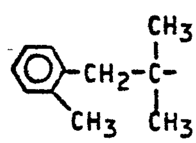 | 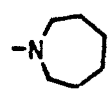 | 1,5189 |
| ( -124) | 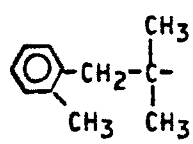 | 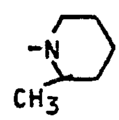 | 1,5177 |
| (I-125) | 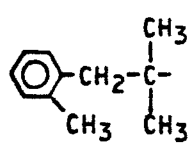 | 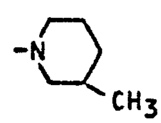 | 1,5178 |

| Bsp.Nr. | 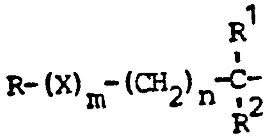 | 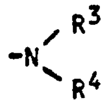 | physikal. Konstante /Brechungsindex $n_D^{20}$ 7 |
|---|---|---|---|
| (I-126) | 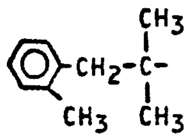 | 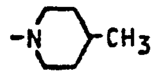 | 1,5126 |
| (I-127) | 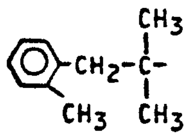 | 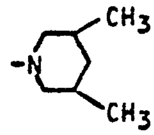 | 1,5091 |
| (I-128) | 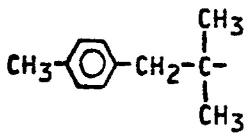 | 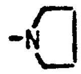 | Fp:170°C |
| (I-129) | 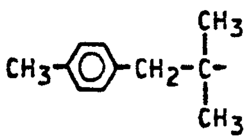 | 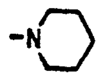 | 1,5150 |
| (I-130) | 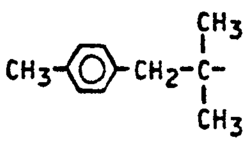 | 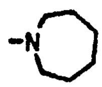 | 1,5170 |
| (I-131) | 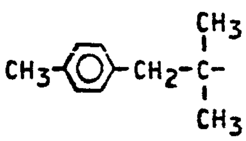 | 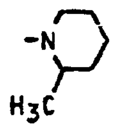 | 1,5032 |
| (I-132) | 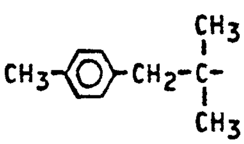 | 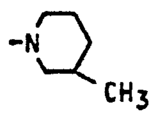 | 1,5111 |
| (I-133) | 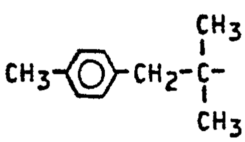 | 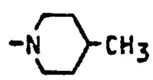 | 1,5105 |
| (I-134) | 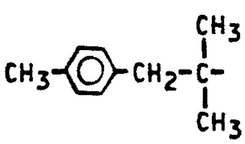 | 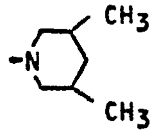 | 1,5072 |
| (I-135) | 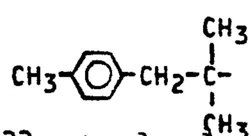 | 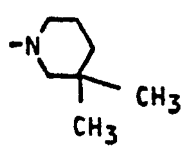 | 1,5049 |

| Bsp.Nr. | $R-(X)_m-(CH_2)_n-\overset{R^1}{\underset{R^2}{C}}-$ | 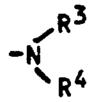 | physikal. Konstante [Brechungsindex $n_D^{20}$; Fließpunkt°C] |
|---|---|---|---|
| (I-136) | 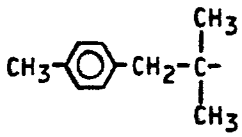 | 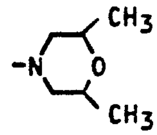 | 1,5069 |
| (I-137) | 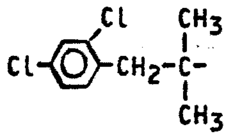 | 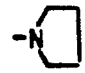 | 1,5346 |
| (I-138) | 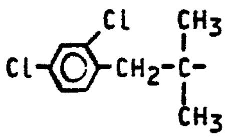 | 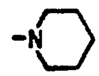 | 1,5340 |
| (I-139) | 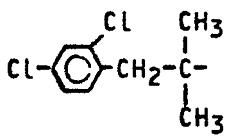 | 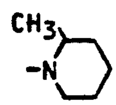 | Kp:220°C/0,2mbar |
| (I-140) | 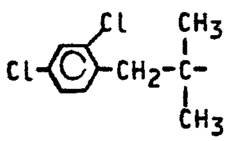 | 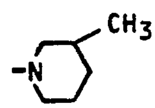 | 1,5293 |
| (I-141) | 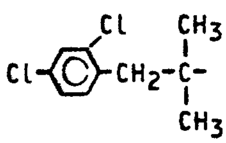 | 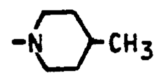 | 1,5286 |
| (I-142) | 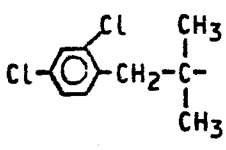 | 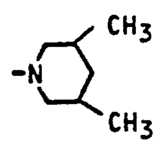 | 1,5251 |
| (I-143) | 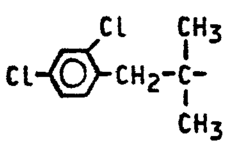 | 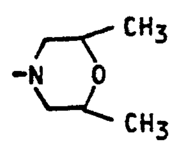 | 1,5234 |
| (I-144) | 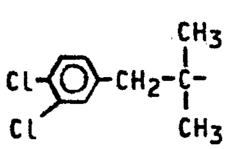 | 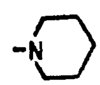 | 73 |
| (I-145) | 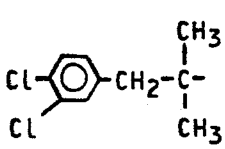 | 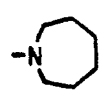 | 1,5355 |

| Bsp.Nr. | 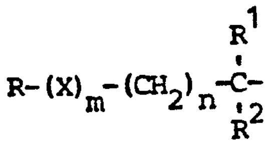 | 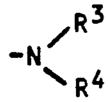 | physikal. Konstante /Brechungsindex $n_D^{20}$:/ |
|---|---|---|---|
| (I-146) | 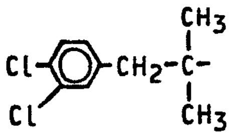 | 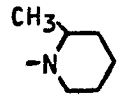 | 1,5297 |
| (I-147) | 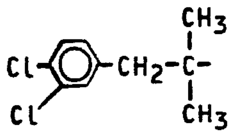 | 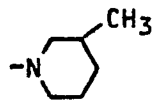 | 1,5293 |
| (I-148) | 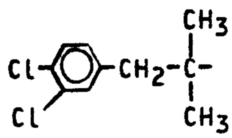 | 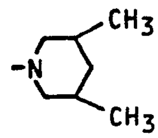 | 1,5247 |
| (I-149) | 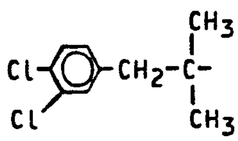 | 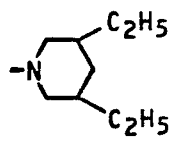 | 1,5170 |
| (I-150) | 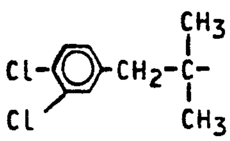 | 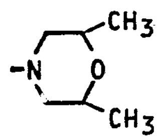 | 1,5246 |
| (I-151) | 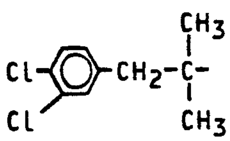 | 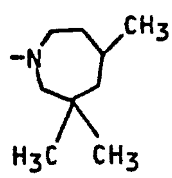 | Harz |
| (I-152) | 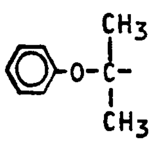 | 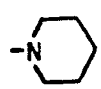 | |
| (I-153) | 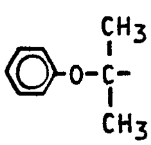 | 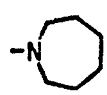 | |
| (I-154) | 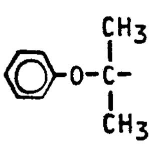 | 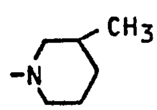 | |
| (I-155) | 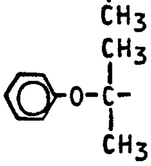 | 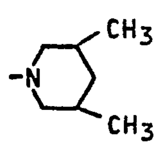 | |

| Bsp.Nr. | $R-(X)_m-(CH_2)_n-\overset{R^1}{\underset{R^2}{C}}-$ | $-N\begin{matrix}R^3\\R^4\end{matrix}$ | physikal. Konstante [Brechungsindex $n_D^{20}$:] |
|---|---|---|---|
| (I-156) | 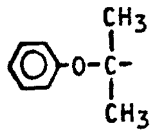 | 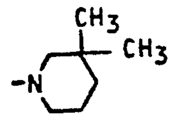 | |
| (I-157) | 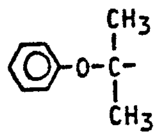 | 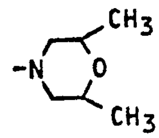 | |
| (I-158) | 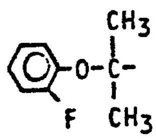 | 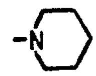 | |
| (I-159) | 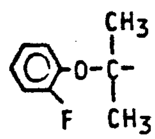 | 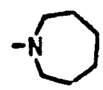 | |
| (I-160) | 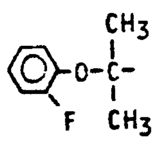 | 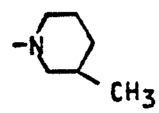 | 1,5087 |
| (I-161) | 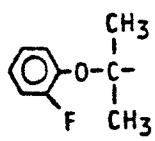 | 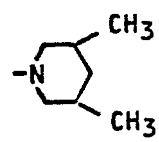 | 1,5073 |
| (I-162) | 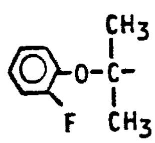 | 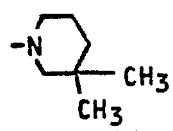 | |
| (I-163) | 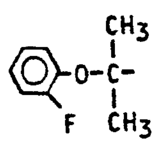 | 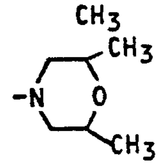 | |
| (I-164) | 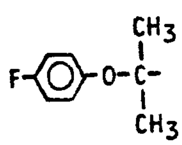 | 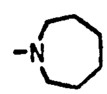 | |
| (I-165) | 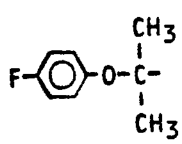 | 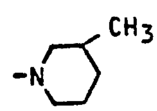 | Kp:200°C/0,3mbar |

| Bsp. Nr. | 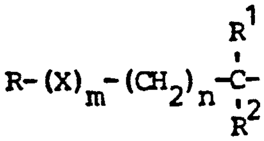 | 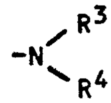 | physikal. Konstante |
|---|---|---|---|
| (I-166) | 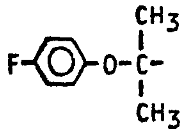 | 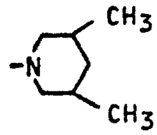 | Kp:190°C/0,2mbar |
| (I-167) | 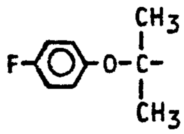 | 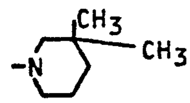 | |
| (I-168) | 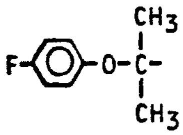 | 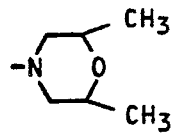 | |
| (I-169) | 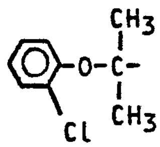 | 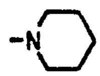 | |
| (I-170) | 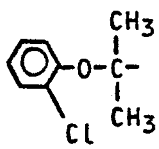 | 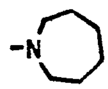 | |
| (I-171) | 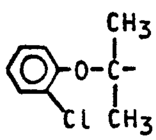 | 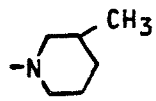 | |
| (I-172) | 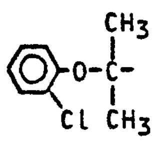 | 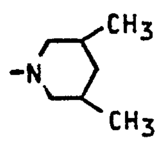 | |
| (I-173) | 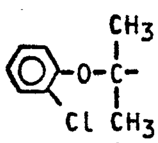 | 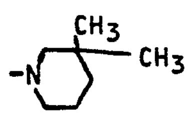 | |
| (I-174) | 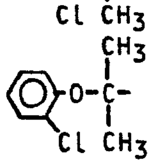 | 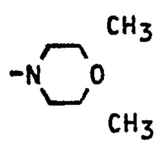 | |
| (I-175) | 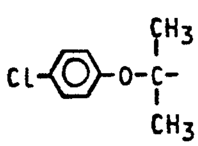 | 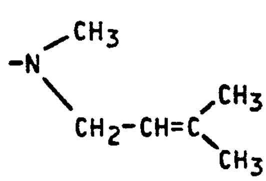 | |

| Bsp.Nr. | 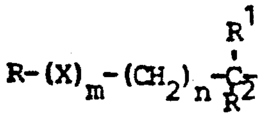 | 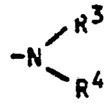 | phys. Konstante /Brechungsindex $n_D^{20}$:7 |
|---|---|---|---|
| (I-176) | 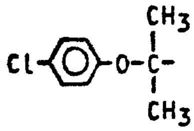 | 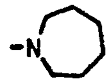 | 1,5092 |
| (I-177) | 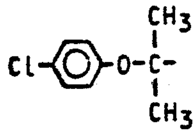 | 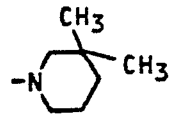 | 1,5062 |
| (I-178) | 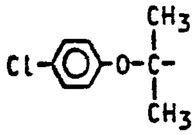 | 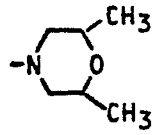 | |
| (I-175) | 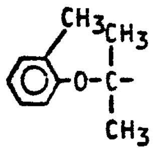 | 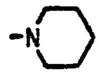 | |
| (I-180) | 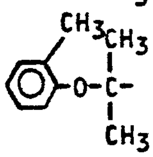 | 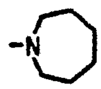 | |
| (I-181) | 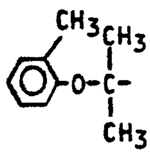 | 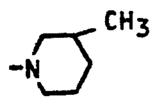 | |
| (I-182) | 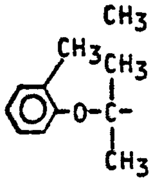 | 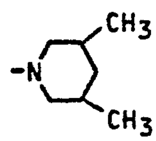 | |
| (I-183) | 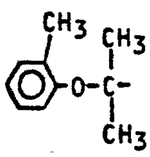 | 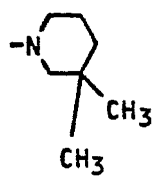 | 1,5039 |
| (I-184) | 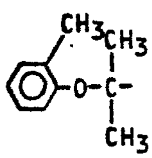 | 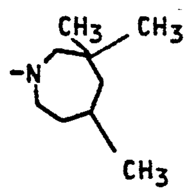 | |
| (I-185) | 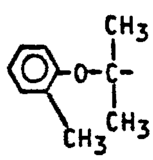 | 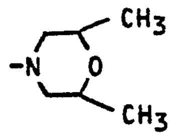 | |

| Bsp.Nr. | 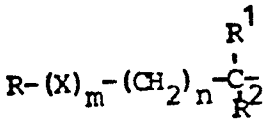 | 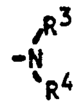 | physikal. Konstante /Brechungsindex $n_D^{20}$:/ |
|---|---|---|---|
| (I-186) | 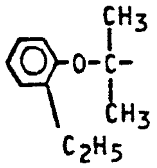 | 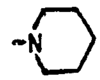 | |
| (I-187) | 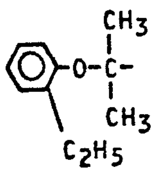 | 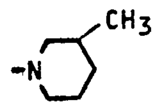 | |
| (I-188) | 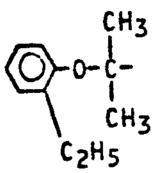 | 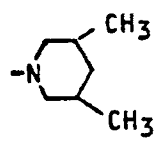 | |
| (I-189) | 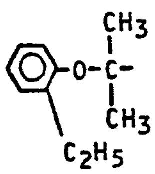 | 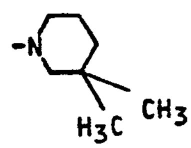 | |
| (I-190) | 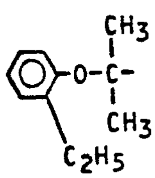 | 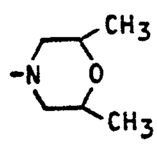 | |
| (I-191) | 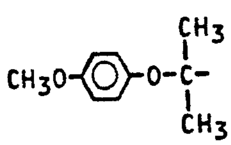 | 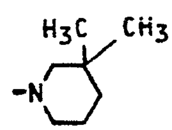 | |
| (I-192) | 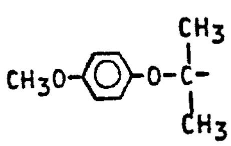 | 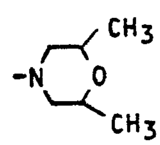 | 1,5067 |
| (I-193) | 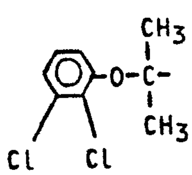 | 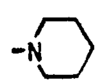 | |
| (I-194) | 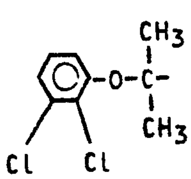 | 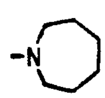 | |

| Bsp.Nr. | 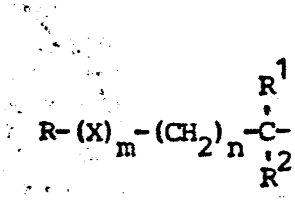 | 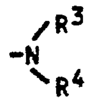 | physikal. Konstante |
|---|---|---|---|
| (I-195) | 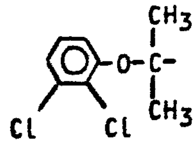 | 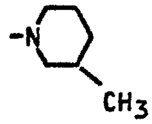 | |
| (I-196) | 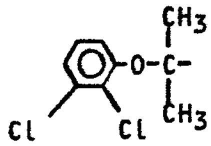 | 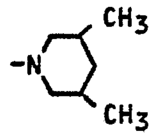 | |
| (I-197) | 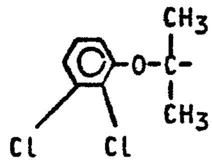 | 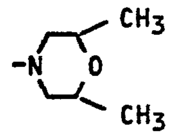 | |
| (I-198) | 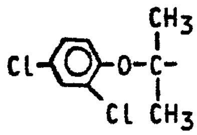 | 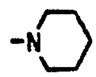 | Kp: 220°C/0,1 mbar |
| (I-198) | 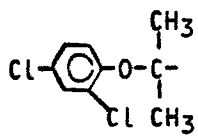 | 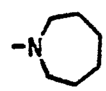 | Kp: 250°C/0,1 mbar |
| (I-200) | 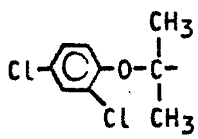 | 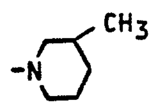 | Kp: 230°C/0,1 mbar |
| (I-201) | 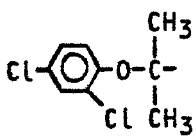 | 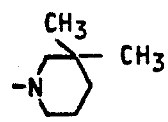 | Kp: 240°C/0,1 mbar |
| (I-202) | 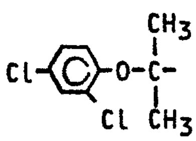 | 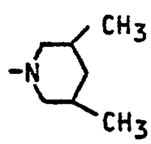 | Kp: 250°C/0,1 mbar |
| (I-203) | 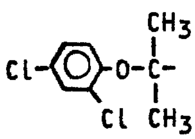 | 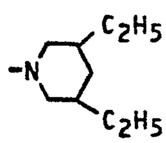 | Kp: 250°C/0,1 mbar |
| (I-204) | 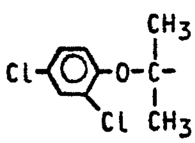 | 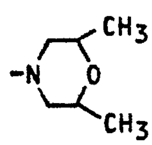 | Kp: 250°C/0,1 mbar |

0167768

| Bsp.Nr. | 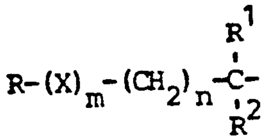 | 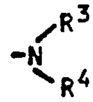 | physikal. Konstante |
|---|---|---|---|
| (I-205) | 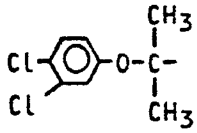 | 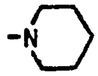 | Kp: 240°C/0,1 mbar |
| (I-206) | 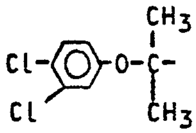 | 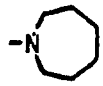 | Kp: 250°C/0,1 mbar |
| (I-207) | 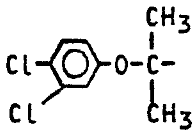 | 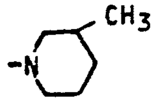 | Kp: 240°C/0,1 mbar |
| (I-208) | 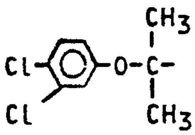 | 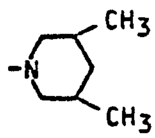 | Kp: 250°C/0,1 mbar |
| (I-209) | 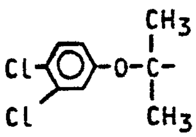 | 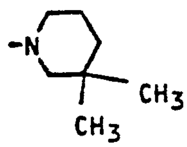 | Kp: 250°C/0,1 mbar |
| (I-210) | 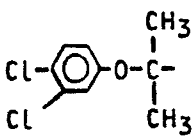 | 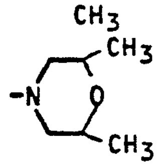 | Kp: 250°C/0,1 mbar |
| (I-211) | 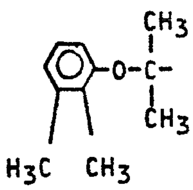 | 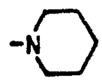 | |
| (I-212) | 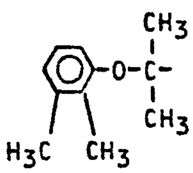 | 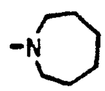 | |
| (I-213) | 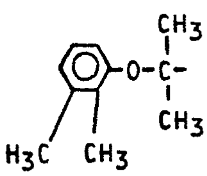 | 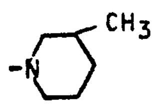 | |

| Bsp.Nr. | 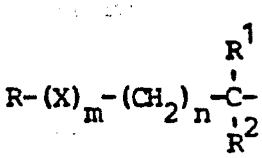 | 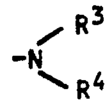 | physikal. Konstante |
|---|---|---|---|
| (I-214) | 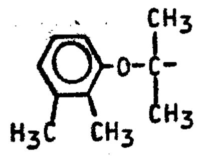 | 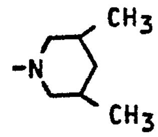 | |
| (I-215) | 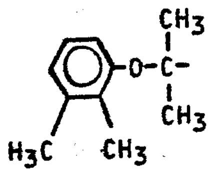 | 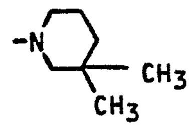 | |
| (I-216) | 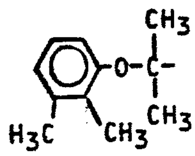 | 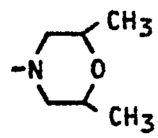 | |
| (I-217) | 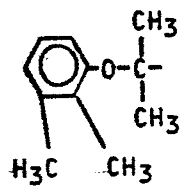 | 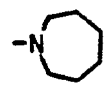 | $n_D^{20}$=1,5021 |
| (I-218) | 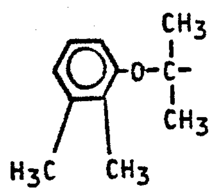 | 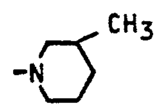 | $n_D^{20}$=1,5012 |
| (I-219) | 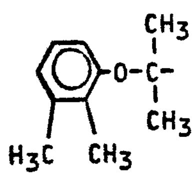 | 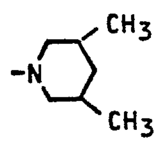 | $n_D^{20}$=1,5034 |
| (I-220) | 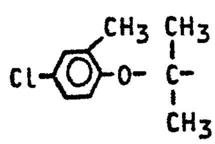 | 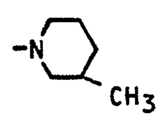 | Kp: 210°C/0,1 mbar |
| (I-221) | 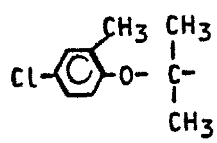 | 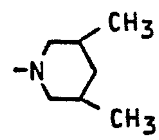 | Kp: 210°C/0,2 mbar |
| (I-222) | 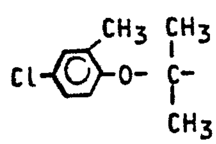 | 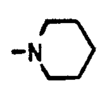 | Kp: 210°C/0,1 mbar |

| Bsp.Nr. | 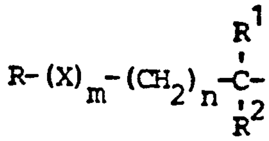 | 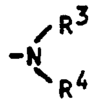 | physikal. Konstante |
|---|---|---|---|
| (I-223) | 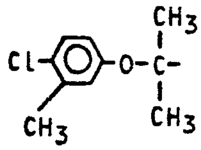 | 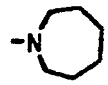 | Kp: 250°C/0,1 mbar |
| (I-224) | 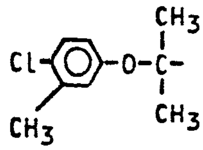 | 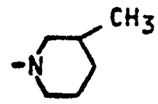 | Kp: 230°C/0,1 mbar |
| (I-225) | 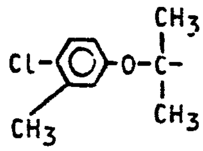 | 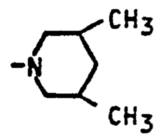 | Kp: 240°C/0,1 mbar |
| (I-226) | 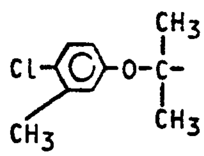 | 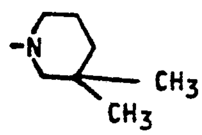 | Kp: 230°C/0,1 mbar |
| (I-227) | 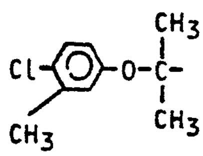 | 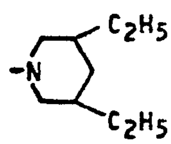 | Kp: 230°C/0,1 mbar |
| (I-228) | 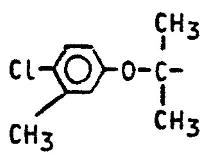 | 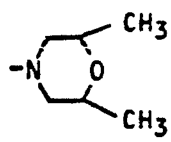 | Kp: 260°C/0,1 mbar |
| (I-229) | 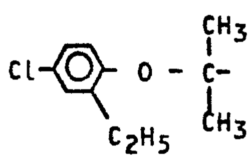 | 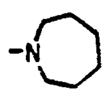 | |
| (I-230) | 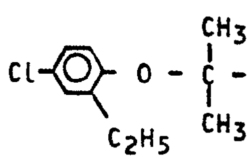 | 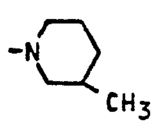 | |
| (I-231) | 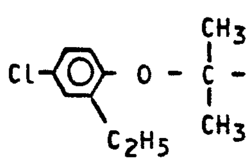 | 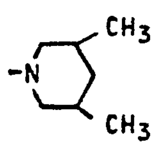 | |

| Bsp.Nr. | 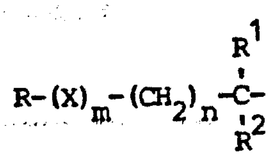 | 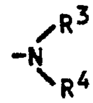 | physikal. Konstante /Brechungsindex $n_D^{20}$:7 |
|---|---|---|---|
| (I-232) | 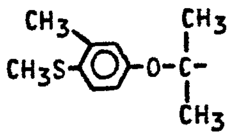 | 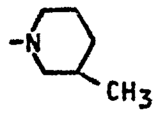 | 1,5027 |
| (I-233) | 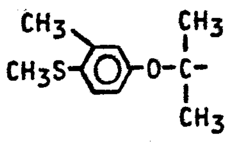 | 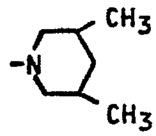 | 1,5041 |
| (I-234) | 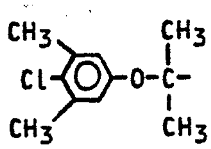 | 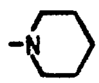 | |
| (I-235) | 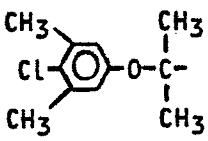 | 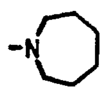 | |
| (I-236) | 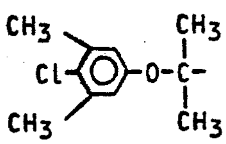 | 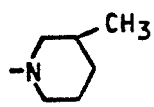 | |
| (I-237) | 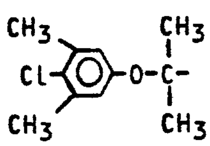 | 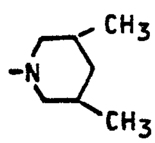 | |
| (I-238) | 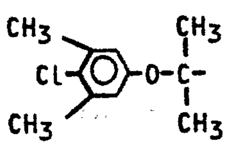 | 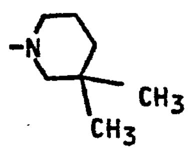 | |
| (I-239) | 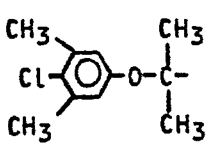 | 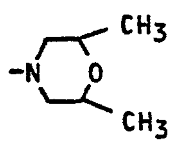 | |
| (I-240) | 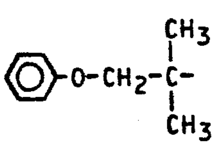 | 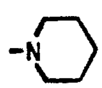 | |

| Bsp.Nr. | 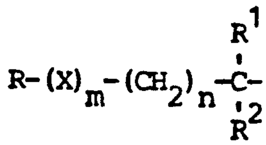 | 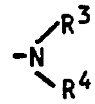 | physikal. Konstante |
|---|---|---|---|
| (I-241) | 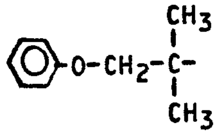 | 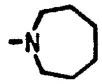 | Kp: 200°C/0,1 mbar |
| (I-242) | 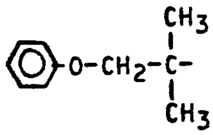 | 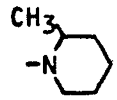 | $n_D^{20}$= 1,4998 |
| (I-243) | 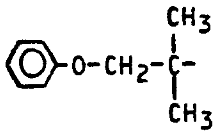 | 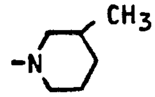 | $n_D^{20}$=1,4973/ Kp: 200°C/0,1 mbar |
| (I-244) | 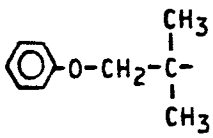 | 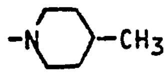 | $n_D^{20}$=1,4939 |
| (I-245) | 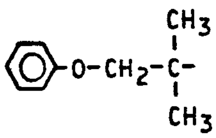 | 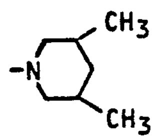 | $n_D^{20}$=1,4972 |
| (I-246) | 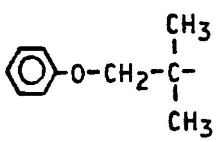 | 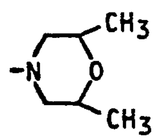 | $n_D^{20}$=1,4925 |
| (I-247) | 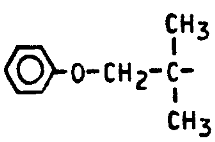 | 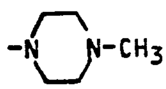 | $n_D^{20}$=1,5031 |
| (I-248) | 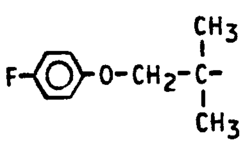 | 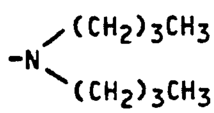 | $n_D^{20}$=1,4702 |
| (I-249) | 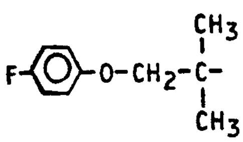 | 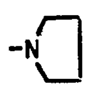 | $n_D^{20}$=1,4912 |
| (I-250) | 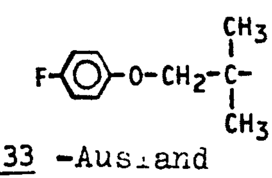 | 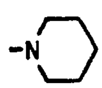 | $n_D^{20}$ =1,4907 |

| Bsp.Nr. | $R-(X)_m-(CH_2)_n-C(R^1)(R^2)-$ | 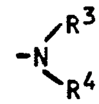 | physikal. Konstante /Brechungsindex $n_D^{20}$:7 |
|---|---|---|---|
| (I-251) | 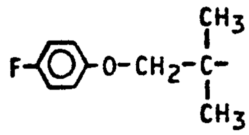 | 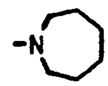 | 1,4930 |
| (I-252) | 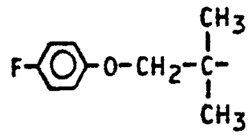 | 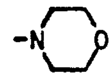 | 1,4921 |
| (I-253) | 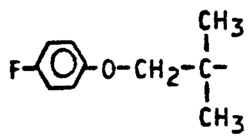 | 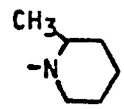 | 1,4897 |
| (I-254) | 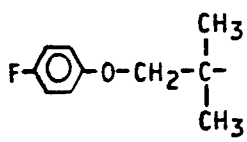 | 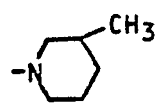 | 1,4873 |
| (I-255) | 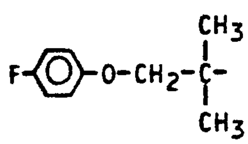 | 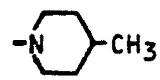 | 1,4868 |
| (I-256) | 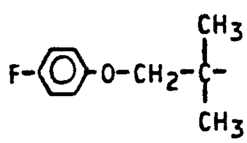 | 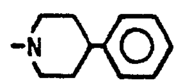 | 1,5118 |
| (I-257) | 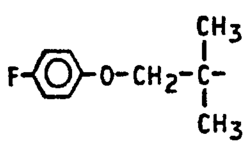 | 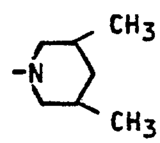 | 1,4841 |
| (I-258) | 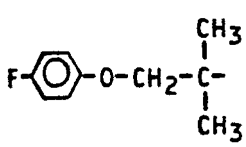 | 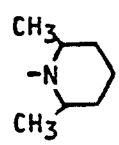 | 1,4893 |
| (I-259) | 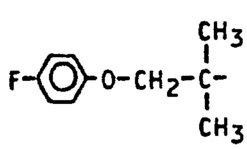 | 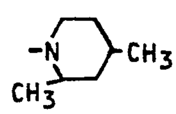 | 1,4864 |
| (I-260) | 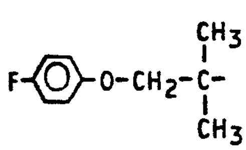 | 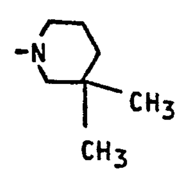 | 1,4825 |

| Bsp.Nr. | $R-(X)_m-(CH_2)_n-C(R^1)(R^2)-$ | 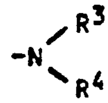 | physikal. Konstante [Brechungsindex $n_D^{20}$:] |
|---|---|---|---|
| (I-261) | 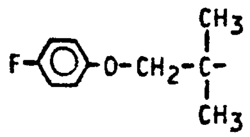 | 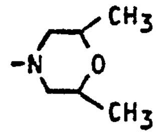 | 1,4839 |
| (I-262) | 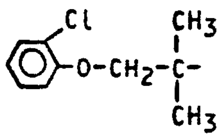 | 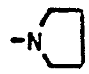 | 1,5064 |
| (I-263) | 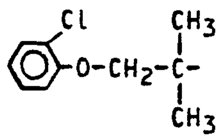 | 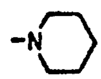 | 1,5082 |
| (I-264) | 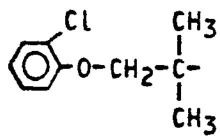 | 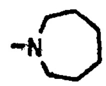 | 1,5090 |
| (I-265) | 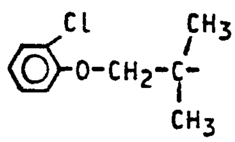 | 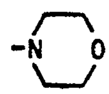 | 1,5089 |
| (I-266) | 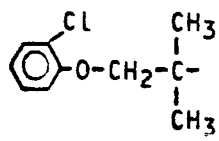 | 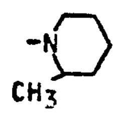 | 1,5047 |
| (I-267) | 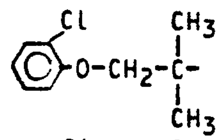 | 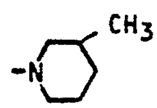 | 1,5051 |
| (I-268) | 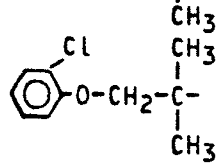 | 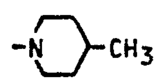 | 1,5044 |
| (I-269) | 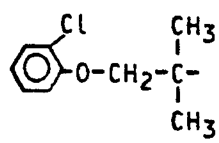 | 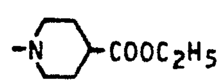 | 1,5044 |
| (I-270) | 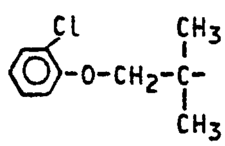 | 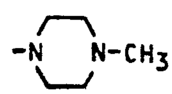 | 1,5021 |

| Bsp.Nr. | $R-(X)_m-(CH_2)_n-C(R^1)(R^2)-$ | 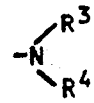 | physikal. Konstante /Brechungsindex $n_D^{20}$:7 |
|---|---|---|---|
| (I-271) | 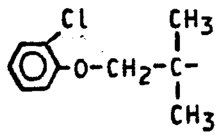 | 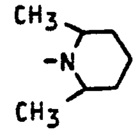 | 1,5076 |
| (I-272) | 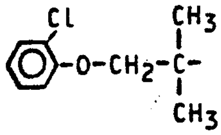 | 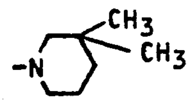 | 1,5045 |
| (I-273) | 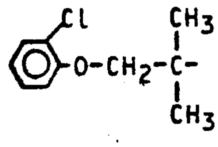 | 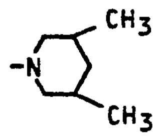 | 1,5047 |
| (I-274) | 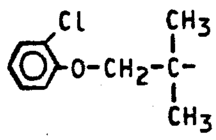 | 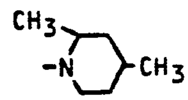 | 1,5040 |
| (I-275) | 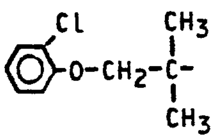 | 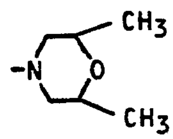 | 1,5062 |
| (I-276) | 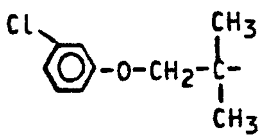 | 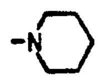 | 1,5073 |
| (I-277) | 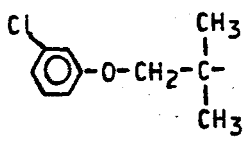 | 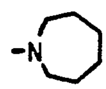 | 1,4995 |
| (I-278) | 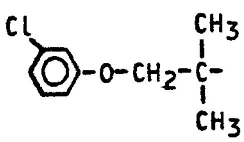 | 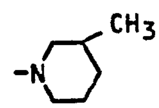 | 1,5073 |
| (I-279) | 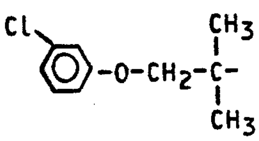 | 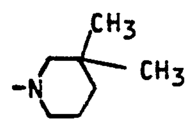 | 1,4995 |
| (I-280) | 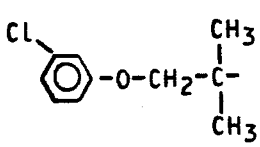 | 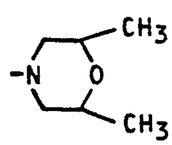 | 1,4970 Kp: 200°C/0,1 mbar |

| Bsp.Nr. | 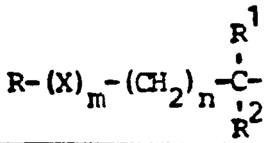 | 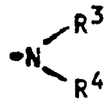 | physikal. Konstante /Brechungsindex $n_D^{20}$:7 |
|---|---|---|---|
| (I-281) | 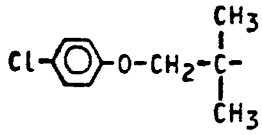 | 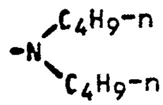 | 1,5377 |
| (I-282) | 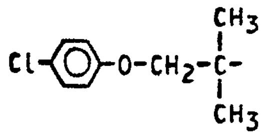 | 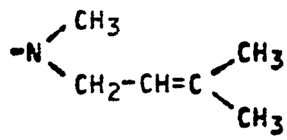 | 1,5097 |
| (I-283) | 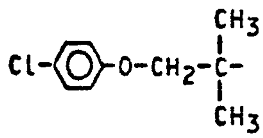 | 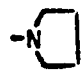 | 1,5200 |
| (I-284) | 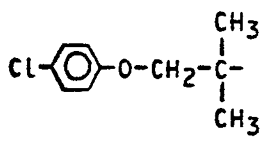 | 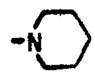 | 1,5121 |
| (I-285) | 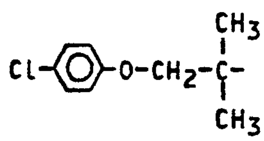 | 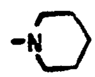 | (xHCl) Fp:153-155°C |
| (I-286) | 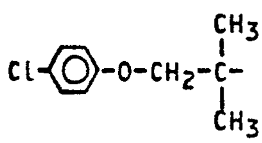 | 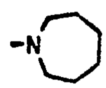 | 1,5079 |
| (I-287) | 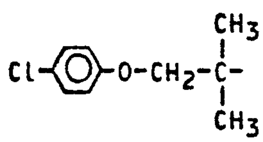 | 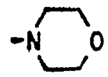 | 1,5191 |
| (I-288) | 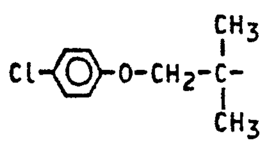 | 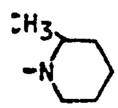 | 1,5102 |
| (I-289) | 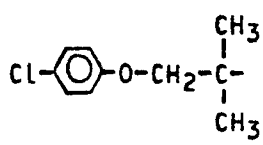 | 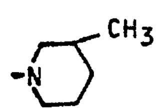 | 1,5045 |
| (I-290) | 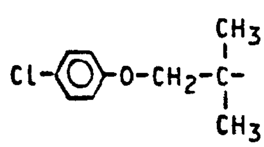 | 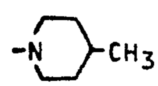 | 1,5040 |

| Bsp.Nr. | 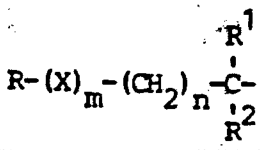 | 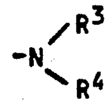 | physikal. Konstante [Brechungsindex $n_D^{20}$:] |
|---|---|---|---|
| (I-291) | 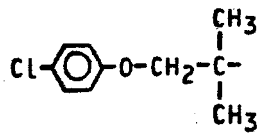 | 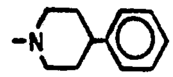 | 1,5431 |
| (I-292) | 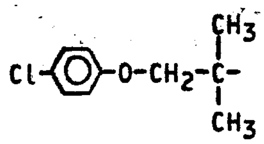 | 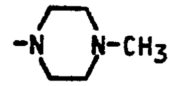 | 1,5082 |
| (I-293) | 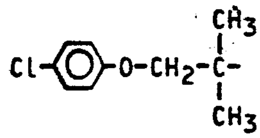 | 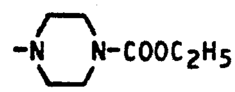 | 1,4993 |
| (I-293) | 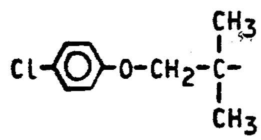 | 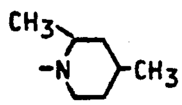 | 1,5031 |
| (I-295) | 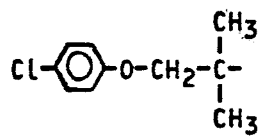 | 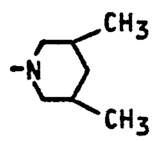 | 1,5000 |
| (I-296) | 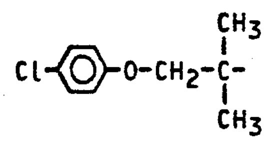 | 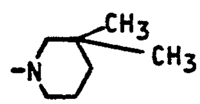 | 1,5105 |
| (I-297) | 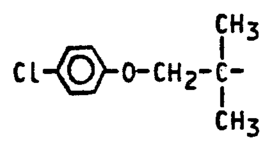 | 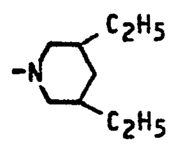 | |
| (I-298) | 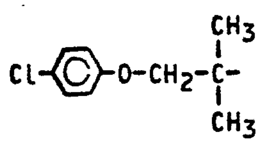 | 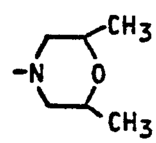 | 1,5361 |
| (I-299) | 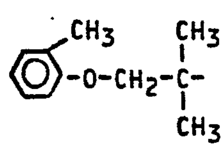 | 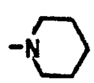 | 1,4952 |
| (I-300) | 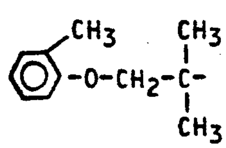 | 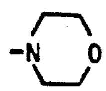 | 1,5002 |

| Bsp.Nr. | 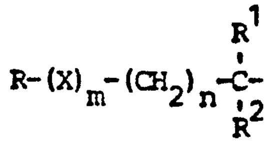 | 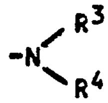 | physikal. Konstante /Brechungs-index $n_D^{20}$:/ |
|---|---|---|---|
| (I-301) | 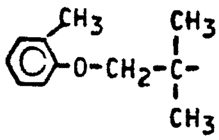 | 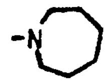 | 1,4995 |
| (I-302) | 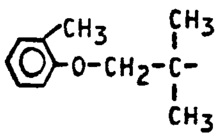 | 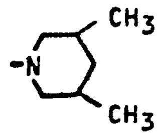 | 1,4909 |
| (I-303) | 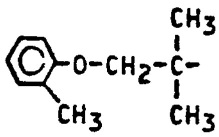 | 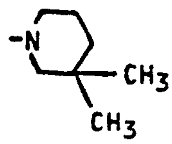 | 1,4908 |
| (I-304) | 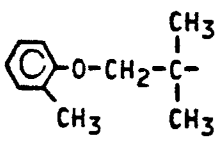 | 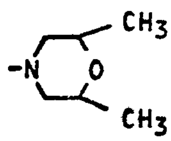 | 1,4874 |
| (I-305) | 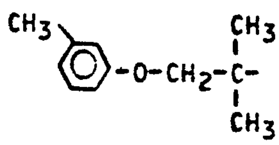 | 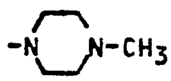 | 1,5023 |
| (I-306) | 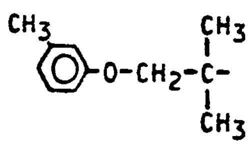 | 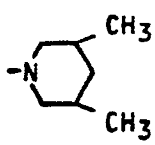 | Kp: 200°C/0,1 mbar |
| (I-307) | 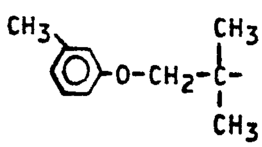 | 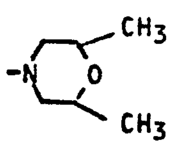 | Kp: 200°C/0,1 mbar |
| (I-308) | 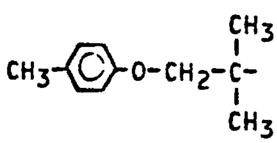 | 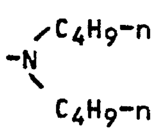 | 1,5132 |
| (I-309) | 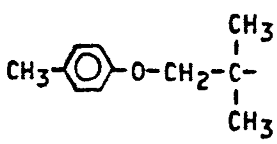 | 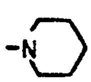 | Oel |
| (I-310) | 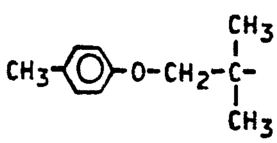 | 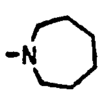 | 1,5118 |

| Bsp.Nr. | 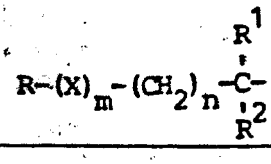 | 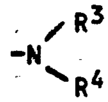 | physikal. Konstante /Brechungs-index $n_D^{20}$:7 |
|---|---|---|---|
| (I-311) | 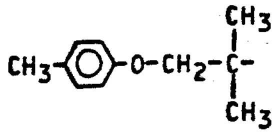 | 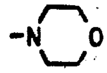 | Oel |
| (I-312) | 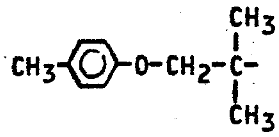 | 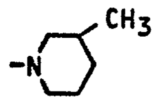 | Oel |
| (I-313) | 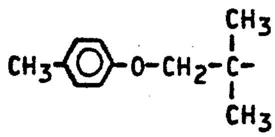 | 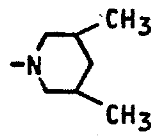 | Oel |
| (I-314) | 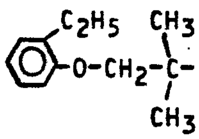 | 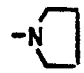 | 1,5110 |
| (I-315) | 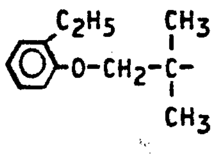 | 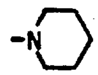 | 1,5087 |
| (I-316) | 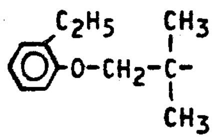 | 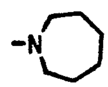 | 1,5094 |
| (I-317) | 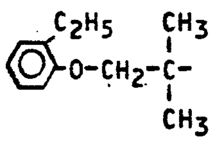 | 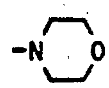 | 1,5076 |
| (I-318) | 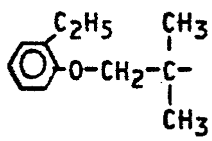 | 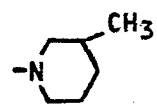 | 1,5042 |
| (I-319) | 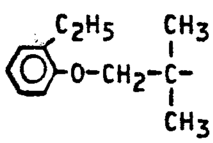 | 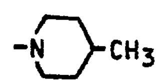 | 1,5067 |
| (I-320) | 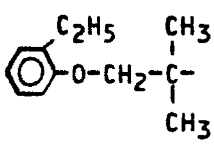 | 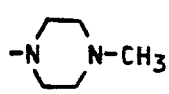 | 1,5046 |

| Bsp.Nr. | 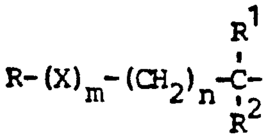 | 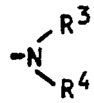 | physikal. Konstante [Brechungsindex $n_D^{20}$] |
|---|---|---|---|
| (I-321) | 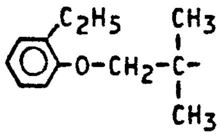 | 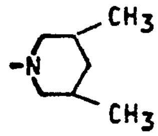 | 1,5047 |
| (I-322) | 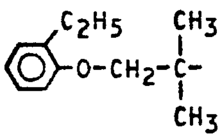 | 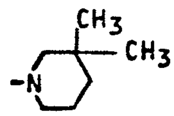 | 1,5071 |
| (I-323) | 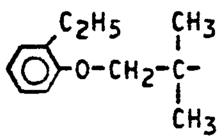 | 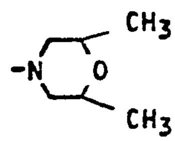 | 1,5031 |
| (I-324) | 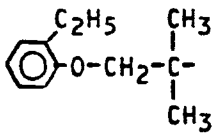 | 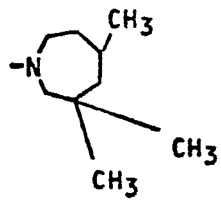 | 1,5119 |
| (I-325) | 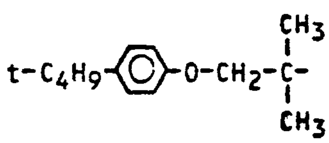 | 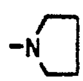 | 1,4948 |
| (I-326) | 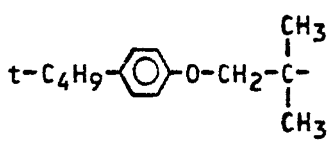 | 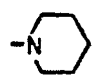 | 1,4954 |
| (I-327) | 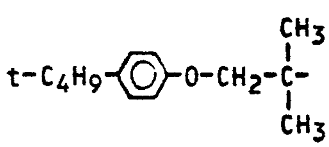 | 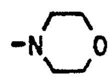 | 1,4962 |
| (I-328) | 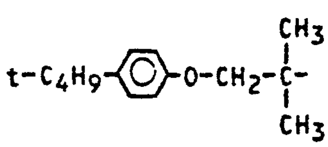 | 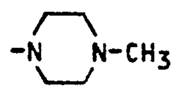 | 1,4975 |
| (I-329) | 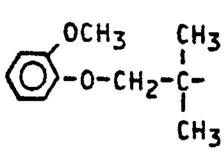 | 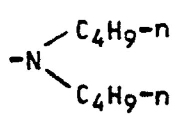 | 1,5063 |
| (I-330) | 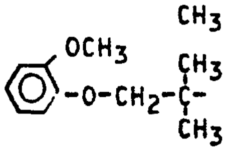 | 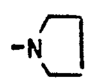 | 1,5057 |

| Bsp.Nr. | $R-(X)_m-(CH_2)_n-C(R^1)(R^2)-$ | $-N(R^3)(R^4)$ | physikal. Konstante /Brechungsindex $n_D^{20}$:7 |
|---|---|---|---|
| (I-331) | 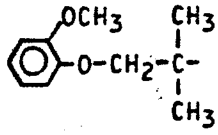 | 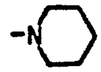 | 1,5070 |
| (I-332) | 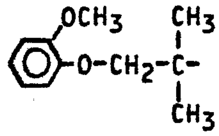 | 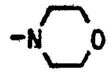 | 1,5067 |
| (I-333) | 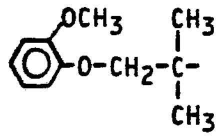 | 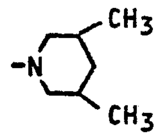 | 1,4944 |
| (I-334) | 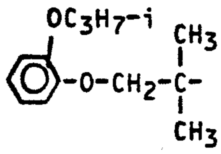 | 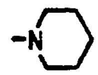 | 1,5087 |
| (I-335) | 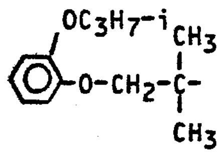 | 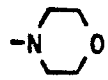 | 1,5060 |
| (I-336) | 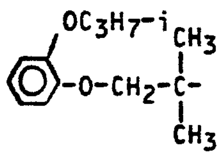 | 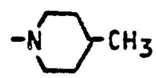 | 1,5095 |
| (I-337) | 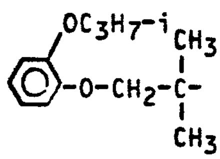 | 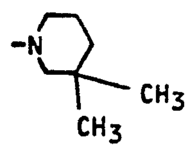 | 1,5041 |
| (I-338) | 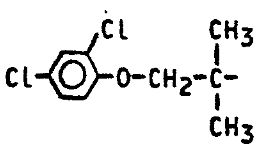 | 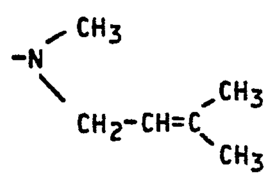 | |
| (I-339) | 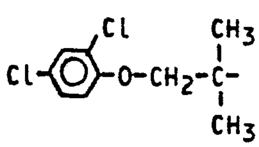 | 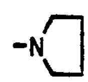 | 1,5016 |
| (I-340) | 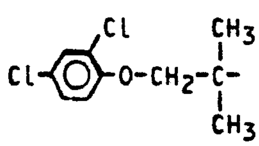 | 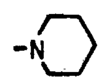 | 1,5006 |

0167768

| Bsp.Nr. | 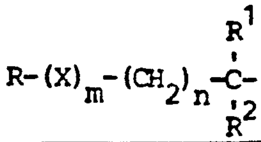 | 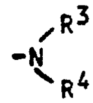 | physikal. Konstante [Brechungsindex $n_D^{20}$] |
|---|---|---|---|
| (I-341) | 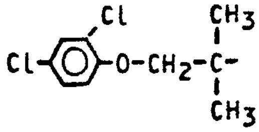 | 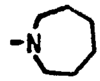 | 1,5076 |
| (I-342) | 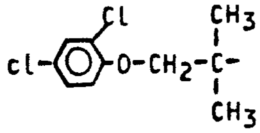 | 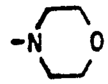 | 1,5064 |
| (I-343) | 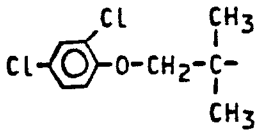 | 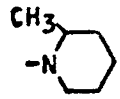 | 1,4941 |
| (I-344) | 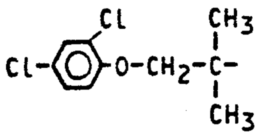 | 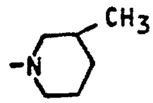 | 1,5034 |
| (I-345) | 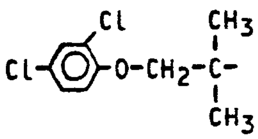 | 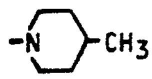 | 1,4987 |
| (I-346) | 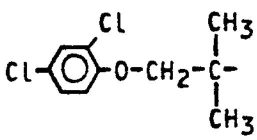 | 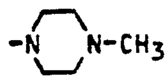 | 1,5023 |
| (I-347) | 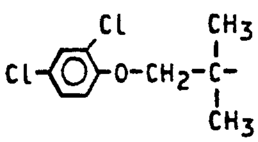 | 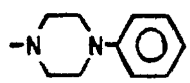 | 1,5092 |
| (I-348) | 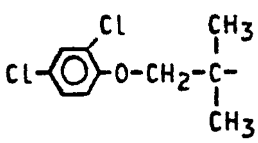 | 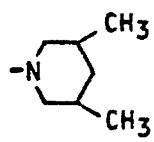 | 1,4980 |
| (I-349) | 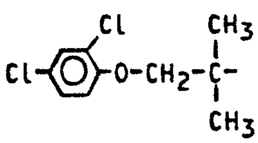 | 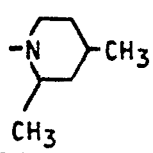 | 1,5021 |
| (I-350) | 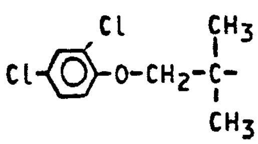 | 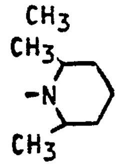 | 1,4980 |

| Bsp.Nr. | 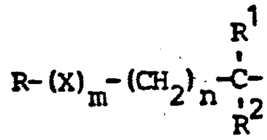 | 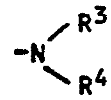 | Physikal. Konstante /Brechungs-index $n_D^{20}$:7 |
|---|---|---|---|
| (I-351) | 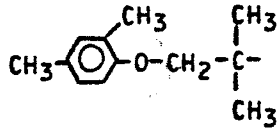 | 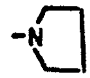 | 1,5081 |
| (I-352) | 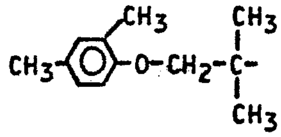 | 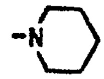 | 1,5064 |
| (I-353) | 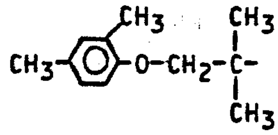 | 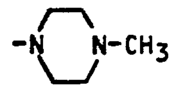 | 1,5086 |
| (I-354) | 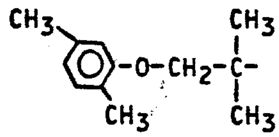 | 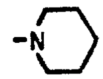 | 1,4980 |
| (I-355) | 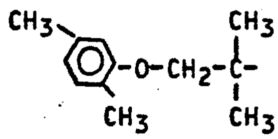 | 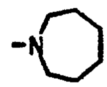 | 1,4941 |
| (I-356) | 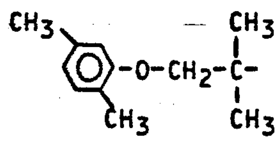 | 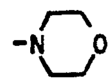 | 1,4979 |
| (I-357) | 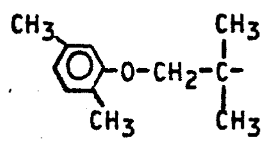 | 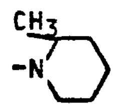 | 1,4953 |
| (I-358) | 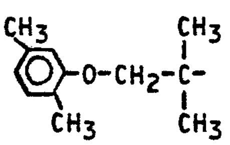 | 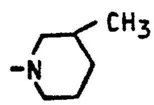 | 1,4939 |
| (I-359) | 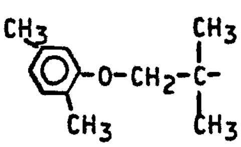 | 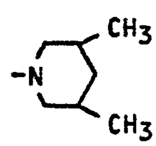 | 1,4902 |
| (I-360) | 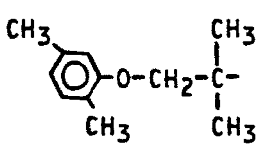 | 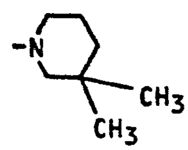 | 1,4900 |

| Bsp.Nr. | $R-(X)_m-(CH_2)_n-\overset{R^1}{\underset{R^2}{C}}-$ | 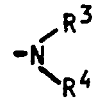 | physikal. Konstante [Brechungsindex $n_D^{20}$] |
|---|---|---|---|
| (I-361) | 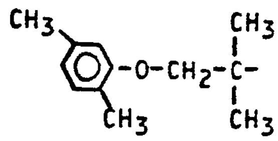 | 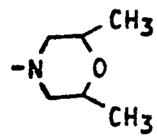 | 1,4905 |
| (I-362) | 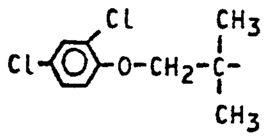 | 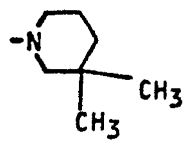 | 1,5044 |
| (I-363) | 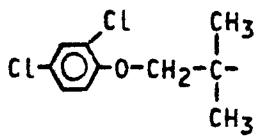 | 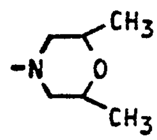 | 1,5034 |
| (I-364) | 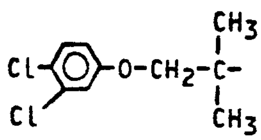 | 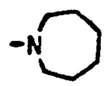 | 1,5128 |
| (I-365) | 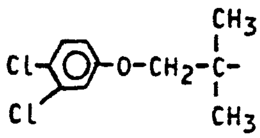 | 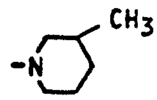 | 1,5094 |
| (I-366) | 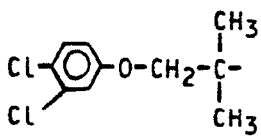 | 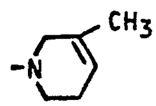 | 1,5039 |
| (I-367) | 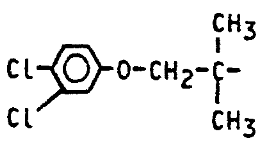 | 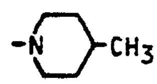 | 1,5034 |
| (I-368) | 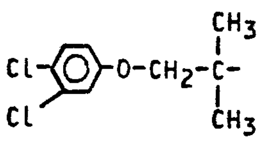 | 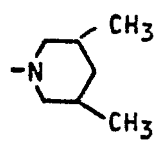 | 1,5087 |
| (I-369) | 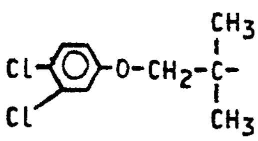 | 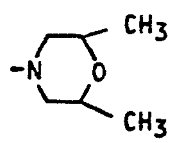 | 1,5122 |
| (I-370) | 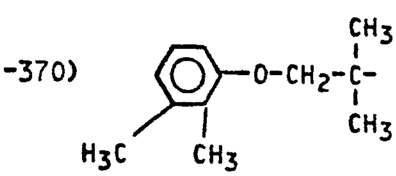 | 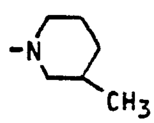 | 1,5066 |

| Bsp.Nr. | 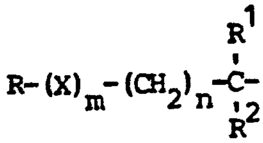 | 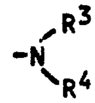 | physikal. Konstante /Brechungs-index $n_D^{20}$:/ |
|---|---|---|---|
| (I-371) | 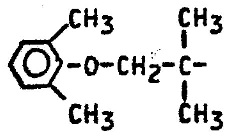 | 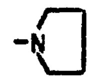 | 1,5087 |
| (I-372) | 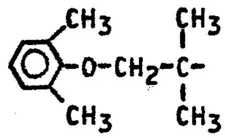 | 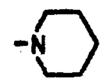 | 1,5074 |
| (I-373) | 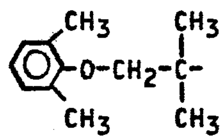 | 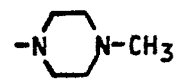 | 1,5067 |
| (I-374) | 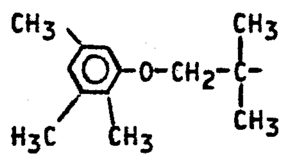 | 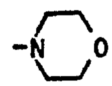 | 1,5034 |
| (I-375) | 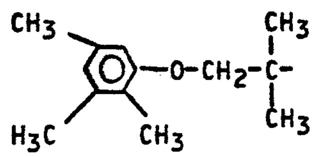 | 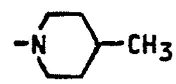 | 1,5019 |
| (I-376) | 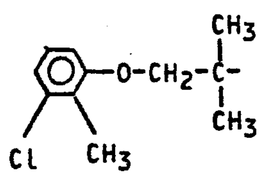 | 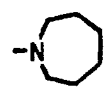 | 1,5044 |
| (I-377) | 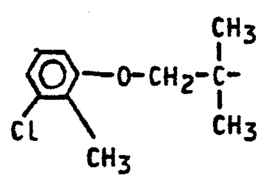 | 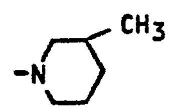 | 1,5052 |
| (I-378) | 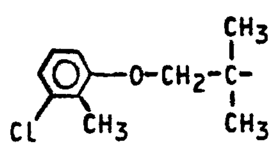 | 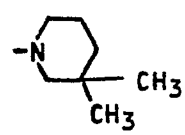 | 1,5042 |
| (I-379) | 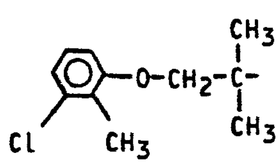 | 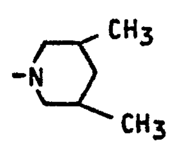 | 1,5039 |

| Bsp.Nr. | 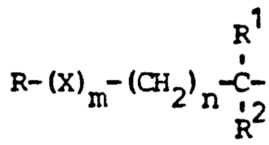 | 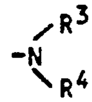 | physikal. Konstante /Brechungsindex $n_D^{20}$:7 |
|---|---|---|---|
| (I-380) | 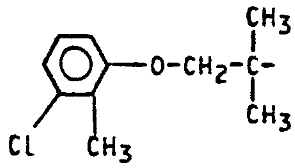 | 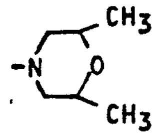 | 1,5067 |
| (I-381) | 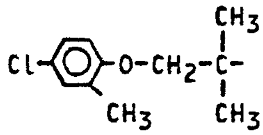 | 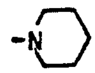 | 1,5038 |
| (I-382) | 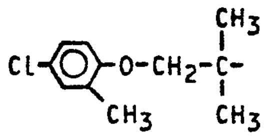 | 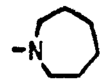 | 1,5068 |
| (I-383) | 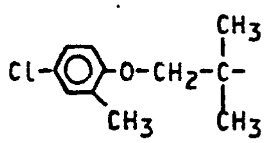 | 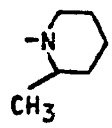 | 1,5031 |
| (I-384) | 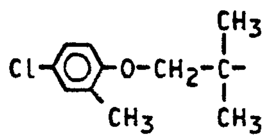 | 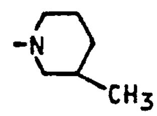 | 1,5021 |
| (I-385) | 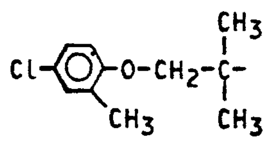 | 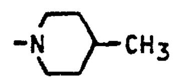 | 1,5012 |
| (I-386) | 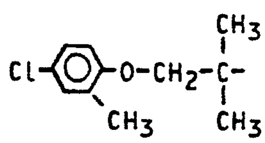 | 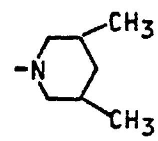 | 1,4984 |
| (I-387) | 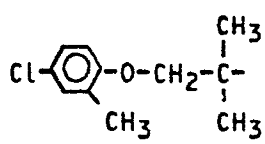 | 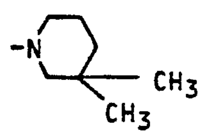 | 1,5069 |
| (I-388) | 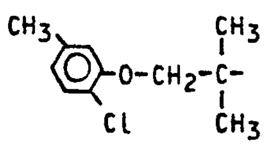 | 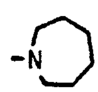 | 1,5031 |
| (I-389) | 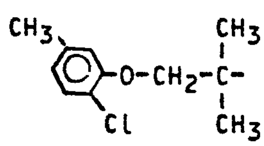 | 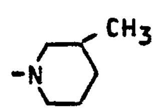 | 1,5004 |

| Bsp.Nr. | 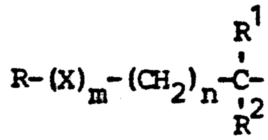 | 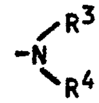 | Physikal. Konstante /Brechungsindex $n_D^{20}$:7 |
|---|---|---|---|
| (I-390) | 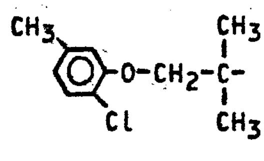 | 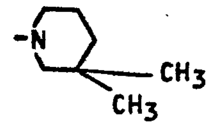 | 1,5027 |
| (I-391) | 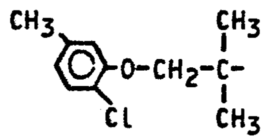 | 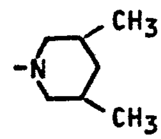 | 1,5017 |
| (I-392) | 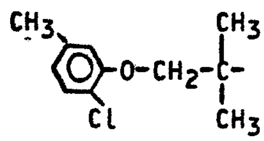 | 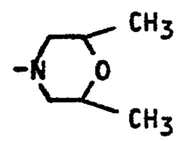 | 1,5062 / Kp: 198°C/0,5 mbar |
| (I-393) | 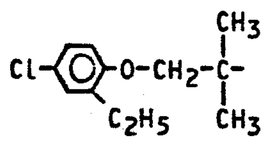 | 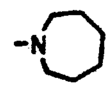 | |
| (I-394) | 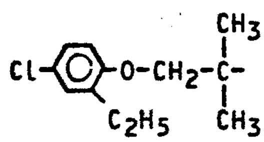 | 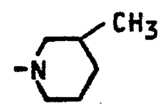 | — |
| (I-395) | 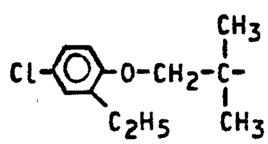 | 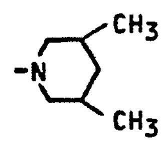 | |
| (I-196) | 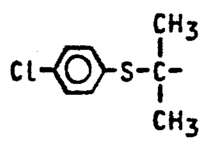 | 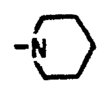 | |
| (I-397) | 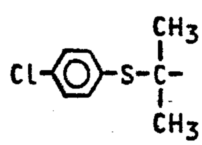 | 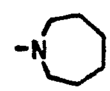 | 1,5061 |
| (I-398) | 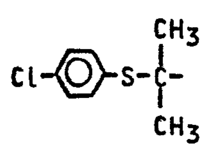 | 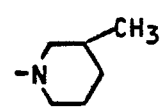 | 1,5067 |
| (I-399) | 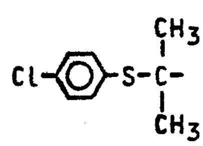 | 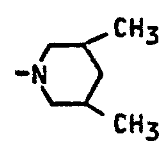 | 1,5044 |

| Bsp.Nr. | 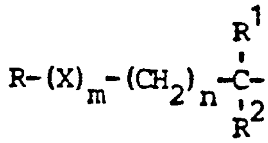 | 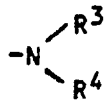 | physikal. Konstante /Brechungsindex $n_D^{20}$:7 |
|---|---|---|---|
| (I-400) | 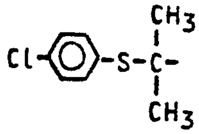 | 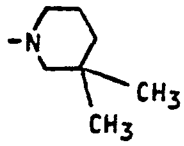 | |
| (I-401) | 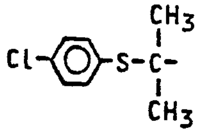 | 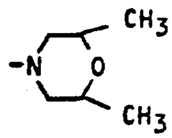 | |
| (I-402) | 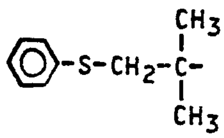 | 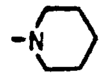 | 1,5445 |
| (I-403) | 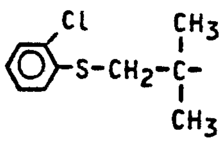 | 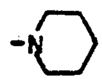 | 1,5422 |
| (I-404) | 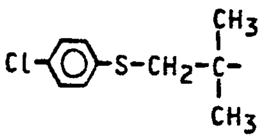 | 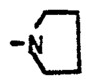 | 1,5538 |
| (I-40 5) | 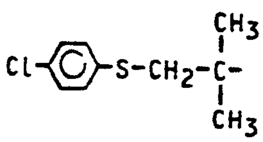 | 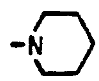 | 1,5491 |
| (I-406) | 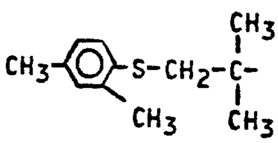 | 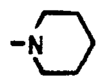 | 1,5457 |
| (I-40 7) | 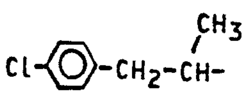 | 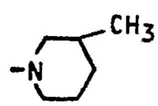 | 1,5173 |
| (I-408) | 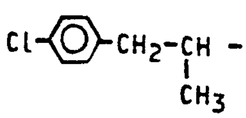 | 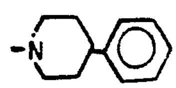 | 1,5506 |
| (I-409) | 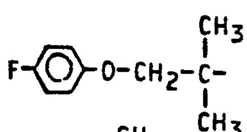 | 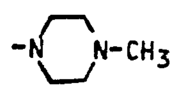 | 1,4919 |
| (I-410) | 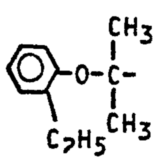 | 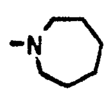 | |

| Bsp.Nr. | 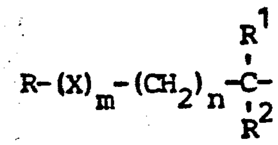 | 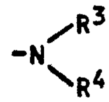 | physikal. Konstante |
|---|---|---|---|
| (I-411) | 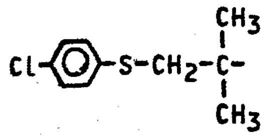 | 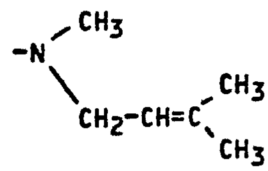 | |

Patentansprüche

1. Fungizide Mittel, gekennzeichnet durch einen Gehalt an einer Wirkstoffkombination, bestehend aus mindestens einer Amino-Verbindung der Formel (I)

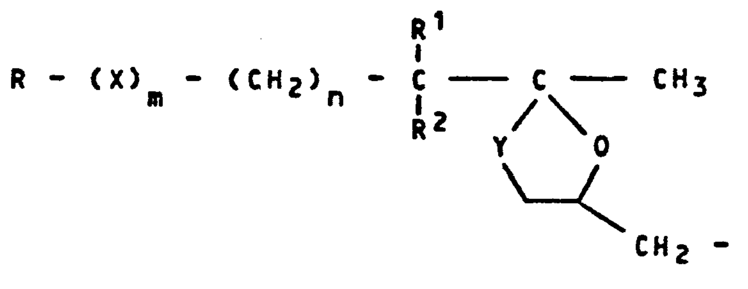

(I)

in welcher

R für gegebenenfalls substituiertes Cycloalkyl oder für gegebenenfalls substituiertes Aryl steht,

$R^1$ für Wasserstoff oder Alkyl steht,

$R^2$ für Alkyl steht,

$R^3$ für Alkyl steht und

$R^4$ für Alkyl, Alkenyl oder Alkinyl steht, oder

$R^3$ und $R^4$ gemeinsam mit dem Stickstoffatom, an welches sie gebunden sind, für einen gegebenenfalls substituierten gesättigten Heterocyclus

stehen, der weitere Heteroatome enthalten kann,

X für Sauerstoff oder Schwefel steht,

Y für Sauerstoff, Schwefel oder die Methylengruppe steht,

m für 0 oder 1 steht und

n für 0 oder 1 steht,

oder deren pflanzenverträglichen Säureadditionssalzen, Metallsalzkomplexen oder Quaternierungsprodukten und einem bekannten Wirkstoff aus der Fungizid-Gruppe

($A_1$) mit der Formel (IIa)

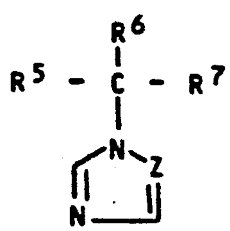

(IIa)

in welcher

$R^5$ für Alkyl, Alkenyl, Alkinyl, Cycloalkyl, Alkylcarbonyl, für gegebenenfalls substituiertes Phenyl, für gegebenenfalls substituiertes Phenylcarbonyl, für einen

gegebenenfalls substituierten Heterocyclus, für die Cyanogruppe, für eine Estergruppierung oder für einen Säureamidrest steht,

$R^6$ für Alkyl, Cycloalkyl oder für gegebenenfalls substituiertes Phenyl steht,

$R^7$ für gegebenenfalls substituiertes Phenyl steht und

Z für Stickstoff oder die CH-Gruppe steht,

oder deren pflanzenverträglichen Säureadditionssalzen oder Metallsalzkomplexen,

und/oder aus der Gruppe

($A_2$) mit der Formel (IIb)

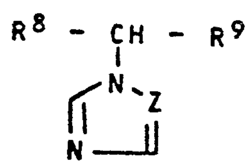

(IIb)

in welcher

$R^8$ für Wasserstoff, für jeweils gegebenenfalls substituiertes Alkyl, Alkenyl, Alkinyl, Cycloalkyl, Aryl, Aryloxy oder Heteroaryloxy steht,

$R^9$ für jeweils gegebenenfalls substituiertes Alkylcarbonyl oder Arylcarbonyl oder für ein funktionelles Derivat dieser Gruppen steht, ferner für eine Carboxygruppe oder einem funktionellen Derivat, für einen Rest $-\underset{OH}{\underset{|}{CH}}-R^{10}$ oder einem funktionellen Derivat steht, wobei

$R^{10}$ für jeweils gegebenenfalls substituiertes Alkyl oder Aryl steht und

Z die oben angegebene Bedeutung hat oder

deren pflanzenverträglichen Säureadditionssalzen oder Metallsalzkomplexen,

und/oder aus der Gruppe

($A_3$) mit der Formel (IIc),

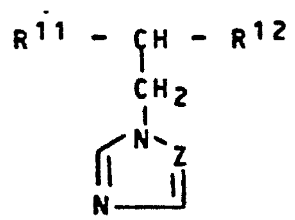

(IIc)

in welcher

$R^{11}$ für jeweils gegebenenfalls substituiertes Aryl oder Aryloxy steht und

$R^{12}$ für Alkyl oder für einen Rest $-S(O)_p-R^8$ steht, wobei p für 0, 1 oder 2 steht und $R^8$ die oben angegebene Bedeutung hat, oder für jeweils gegebenenfalls substituiertes Alkylcarbonyl oder Arylcarbonyl oder für ein funktionelles Derivat dieser Gruppen, oder für einen Rest $-\underset{OH}{\underset{|}{CH}}-R^{10}$ oder einem funktionellen Derivat davon steht, wobei

$R^{10}$ und Z die oben angegebene Bedeutung haben oder

deren pflanzenverträglichen Säureadditionssalzen oder Metallsalzkomplexen,

und/oder aus der Gruppe

($A_4$) mit der Formel (IId),

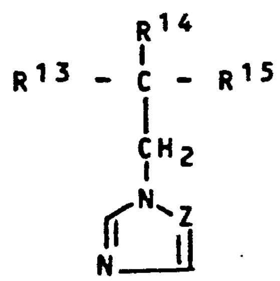

(IId)

in welcher

$R^{13}$ für jeweils gegebenenfalls substituiertes Alkyl, Alkenyl, Alkinyl, Cycloalkyl, Heterocyclyl, Aryl oder Heteroaryl steht,

$R^{14}$ für jeweils gegebenenfalls substituiertes Alkyl, Alkenyl, Alkinyl, Cycloalkyl oder Aryl steht,

$R^{15}$ für Chlor, Cyano oder einen Rest $-OR^{16}$ steht, wobei $R^{16}$ für Wasserstoff oder für jeweils gegebenenfalls substituiertes Alkyl, Alkenyl, Alkinyl oder Acyl steht und

Z die oben angegebene Bedeutung hat,

oder deren pflanzenverträglichen Säureadditionssalzen oder Metallsalzkomplexen, und/oder aus der Gruppe

($A_5$) mit der Formel (IIe)

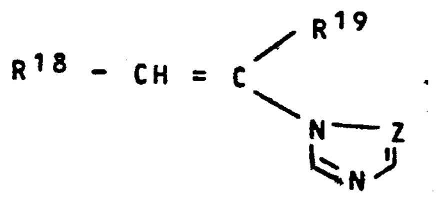

(IIe)

in welcher

$R^{18}$ für jeweils gegebenenfalls substituiertes Alkyl, Cycloalkyl oder Aryl steht,

$R^{19}$ für jeweils gegebenenfalls substituiertes Alkylcarbonyl oder Arylcarbonyl oder für ein funktionelles Derivat dieser Gruppen oder

für einen Rest $-\underset{OH}{\underset{|}{CH}}-R^{10}$ oder

ein funktionelles Derivat steht, wobei

$R^{10}$ und Z die oben angegebene Bedeutung haben,

oder deren pflanzenverträglichen Säureadditionssalzen oder Metallsalzkomplexen und/oder aus der Gruppe

($A_6$) mit der Formel (IIf),

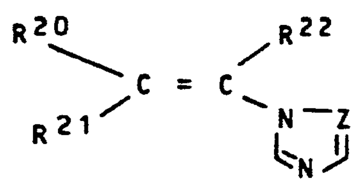

(IIf)

in welcher

$R^{20}$ für Alkyl, für gegebenenfalls substituiertes Phenyl oder für gegebenenfalls substituiertes Phenoxy steht,

$R^{21}$ für jeweils gegebenenfalls substituiertes Alkylcarbonyl oder Arylcarbonyl oder für ein funktionelles Derivat dieser Gruppen, für einen Rest $-\underset{OH}{\underset{|}{CH}}-R^{10}$ oder ein funktionelles Derivat dessen steht,

$R^{22}$ für Wasserstoff oder für jeweils gegebenenfalls substituiertes Aryl oder Aryloxy steht und

$R^{10}$ und Z die oben angegebene Bedeutung haben,

und deren pflanzenverträglichen Säureadditionssalzen oder Metallsalzkomplexen und/oder aus der Gruppe

($A_7$) mit der Formel (IIg),

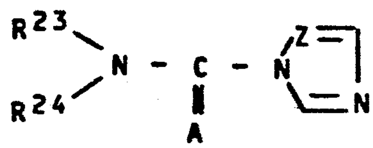

(IIg)

in welcher

$R^{23}$ für Alkyl steht,

$R^{24}$ für jeweils gegebenenfalls substituiertes Alkyl, Alkenyl, Alkinyl, Cycloalkyl oder Aryl steht,

A für Sauerstoff oder Schwefel steht und

Z die oben angegebene Bedeutung hat,

oder deren pflanzenverträglichen Säureadditionssalzen oder Metallsalzkomplexen und/oder aus der Gruppe

($A_8$) mit der Formel (IIh),

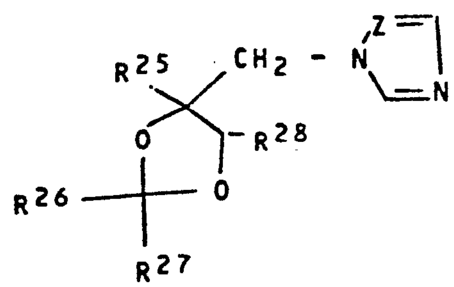

(IIh)

in welcher

$R^{25}$ für gegebenenfalls substituiertes Aryl steht,

$R^{26}$ und $R^{27}$ jeweils unabhängig voneinander für Wasserstoff, Alkyl oder Aryl stehen oder gemeinsam für einen zweifach verknüpften Alkylenrest stehen,

$R^{28}$ für Wasserstoff oder Alkyl steht und

Z die oben angegebene Bedeutung hat,

oder deren pflanzenverträglichen Säureadditionssalzen oder Metallsalzkomplexen und/oder aus der Gruppe

(B) mit der Formel (III),

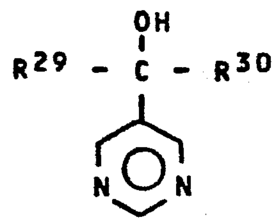

(III)

in welcher

$R^{29}$ für Alkyl, Cycloalkyl oder für gegebenenfalls substituiertes Aryl steht und

$R^{30}$ für jeweils gegebenenfalls substituiertes Aryl, Aralkyl oder Aryloxyalkyl steht,

oder deren pflanzenverträglichen Säureadditionssalzen und/oder aus der Gruppe

(C) mit der Formel (IV),

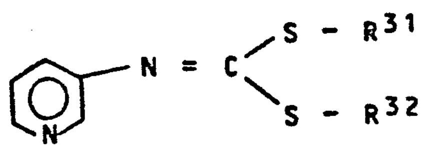

(IV)

in welcher

$R^{31}$ und $R^{32}$ unabhängig voneinander für Alkyl oder für gegebenenfalls substituiertes Aralkyl stehen,

oder deren pflanzenverträglichen Säureadditionssalzen und/oder aus der Gruppe

(D) mit der Formel (V),

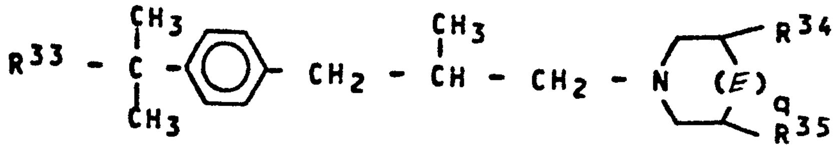 (V)

in welcher

$R^{33}$ für Alkyl, Cycloalkyl oder Halogenalkyl steht,

$R^{34}$ und $R^{35}$ unabhängig voneinander für Wasserstoff, Alkyl, Hydroxyalkyl, Hydroxy oder Aryl stehen,

*E* für Sauerstoff, Schwefel, zweifach verknüpftes Alkylen oder die $>N-R^{36}$-Gruppe steht, wobei

$R^{36}$ für Wasserstoff oder Alkyl steht und

q für 0 oder 1 steht,

oder deren pflanzenverträglichen Säureadditionssalzen.

2. Fungizide Mittel nach Anspruch 1, dadurch gekennzeichnet, daß in den Wirkstoffkombinationen mindestens eine Aminoverbindung der Formel (I) enthalten ist, in der

R für gegebenenfalls einfach bis mehrfach, gleich oder verschieden substituiertes Phenyl oder Cyclohexyl steht, wobei als Substituenten in Frage kommen: Halogen, jeweils geradkettiges oder verzweigtes Alkyl, Alkoxy, Alkylthio, Halogenalkyl, Halogenalkoxy oder Halogenalkylthio mit jeweils 1 bis 4 Kohlenstoffatomen und gegebenenfalls 1 bis 9 gleichen oder verschiedenen Halogenatomen,

$R^1$ für Wasserstoff oder für geradkettiges oder verzweigtes Alkyl mit 1 bis 4 Kohlenstoffatomen steht,

$R^2$ für geradkettiges oder verzweigtes Alkyl mit 1 bis 4 Kohlenstoffatomen steht,

$R^3$ für geradkettiges oder verzweigtes Alkyl mit 1 bis 6 Kohlenstoffatomen steht und

$R^4$ für jeweils geradkettiges oder verzweigtes Alkyl, Alkenyl oder Alkinyl mit jeweils bis zu 8 Kohlenstoffatomen steht, oder

$R^3$ und $R^4$ gemeinsam mit dem Stickstoffatom, an welches sie gebunden sind, für einen gegebenenfalls einfach oder mehrfach, gleich oder verschieden substituierten gesättigten Heterocyclus mit 5 bis 7 Ringgliedern und 1 oder 2 Stickstoff- und/oder Sauerstoffatomen stehen,

und wobei als Substituenten in Frage kommen: geradkettiges oder verzweigtes Alkyl mit 1 bis 4 Kohlenstoffatomen, Hydroxymethyl oder deren Ether und Ester, geradkettiges oder verzweigtes Alkoxycarbonyl mit 1 bis 4 Kohlenstoffatomen,

X für Sauerstoff oder Schwefel steht,

Y für Sauerstoff, Schwefel oder die Methylengruppe steht,

m für 0 oder 1 steht und

n für 0 oder 1 steht,

sowie deren pflanzenverträgliche Säureadditionssalze, Metallsalzkomplexe und Quaternierungsprodukte.

153. Fungizide Mittel nach Anspruch 1, dadurch gekennzeichnet, daß in der Formel (I)

R für gegebenenfalls ein- bis dreifach, gleich oder verschieden substituiertes Phenyl steht, wobei als Substituenten in Frage kommen: Fluor, Chlor, Brom, Methyl, Ethyl, n- und i-Propyl, n-, i-, s- und t-Butyl, Methoxy, Ethoxy, n- und i-Propoxy, Methylthio, Trifluormethyl, Trifluormethoxy und Trifluormethylthio; oder für gegebenenfalls ein- bis fünffach, gleich oder verschieden substituiertes Cyclohexyl steht, wobei als Substituenten in Frage kommen: Methyl, Ethyl, n- und i-Propyl,

$R^1$ für Wasserstoff oder Methyl steht,

$R^2$ für Methyl oder Ethyl steht,

$R^3$ für Methyl steht und

$R^4$ für Methyl, Ethyl, n- und i-Propyl, n- und i-Butyl, n- und i-Pentyl, n- und i-Hexyl, Allyl, Butenyl, n- und i-Pentenyl, n- und i-Hexenyl, Propargyl, Butinyl, n- und i-Pentinyl oder n- und i-Hexinyl steht oder

$R^3$ und $R^4$ gemeinsam mit dem Stickstoffatom, an welches sie gebunden sind, für einen gegebenenfalls ein- bis vierfach, gleich oder verschieden substituierten Heterocyclus der Formel

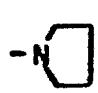 ; 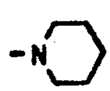 ; 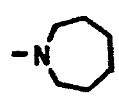 ; 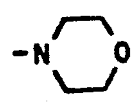 oder 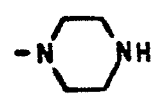

stehen, wobei als Substituenten in Frage kommen: Methyl, Ethyl, Phenyl, Hydroxymethyl, Methoxymethyl, Ethoxymethyl, Acyloxymethyl, Methoxycarbonyl oder Ethoxycarbonyl,

X für Sauerstoff oder Schwefel steht,

Y für Sauerstoff, Schwefel oder die Methylengruppe steht,

m für 0 oder 1 steht und

n für 0 oder 1 steht,

deren pflanzenverträglichen Säureadditionssalze, Metallsalzkomplexe oder Quaternierungsprodukte.

4. Fungizide Mittel nach Anspruch 1, dadurch gekennzeichnet, daß in den Wirkstoffkombinationen mindestens eine Aminoverbindung der Formel I, in welcher

R für gegebenenfalls ein- bis dreifach, gleich oder verschieden substituiertes Phenyl steht, wobei als Substituenten in Frage kommen: Fluor, Chlor, Brom, Methyl, Ethyl, n- und i-Propyl, n-, i-, s- und t-Butyl, Methoxy, Ethoxy, n- und i-Propoxy, Methylthio, Trifluormethyl, Trifluormethoxy und Trifluormethylthio oder für gegebenenfalls ein- bis fünffach, gleich oder verschieden substituiertes Cyclohexyl steht, wobei als Substituenten in Frage kommen: Methyl, Ethyl, n- und i-Propyl,

$R^1$ für Wasserstoff oder Methyl steht,

$R^2$ für Methyl oder Ethyl steht,

$R^3$ für Methyl steht und

$R^4$ für Methyl, Ethyl, n- und i-Propyl, n- und i-Butyl, n- und i-Pentyl, n- und i-Hexyl, Allyl, Butenyl, n- und i-Pentenyl, n- und i-Hexenyl, Propargyl, Butinyl, n- und i-Pentinyl oder n- und i-Hexinyl steht oder

$R^3$ und $R^4$ gemeinsam mit dem Stickstoffatom, an welches sie gebunden sind, für einen gegebenenfalls ein- bis vierfach, gleich oder verschieden substituierten Heterocyclus der Formel

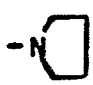 ; 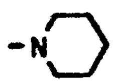 ; 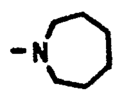 ; 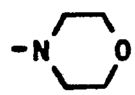 oder 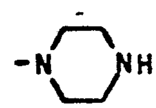

stehen, wobei als Substituenten in Frage kommen: Methyl, Ethyl, Phenyl, Hydroxymethyl, Methoxymethyl, Ethoxymethyl, Acyloxymethyl, Methoxycarbonyl oder Ethoxycarbonyl,

X für Sauerstoff oder Schwefel steht,

Y für Sauerstoff, Schwefel oder die Methylengruppe steht,

m für 0 oder 1 steht und

n für 0 oder 1 steht,

deren pflanzenverträglichen Säureadditionssalze, Metallsalzkomplexe oder Quaternierungsprodukte und die Verbindung aus der Gruppe ($A_1$):

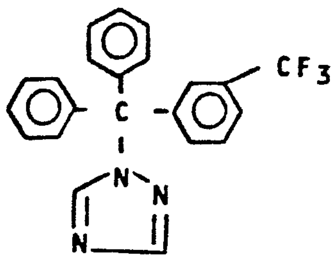

(IIa-1)

und/oder eine Verbindung aus der Gruppe ($A_2$)

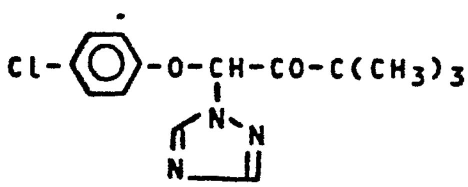

(IIb-1)

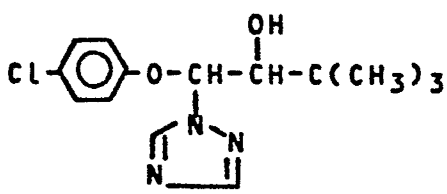

(II b-2)

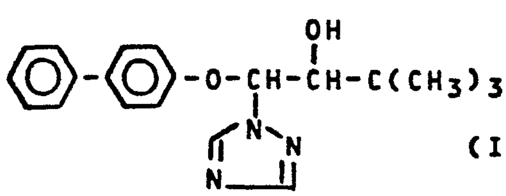

(IIb-3)

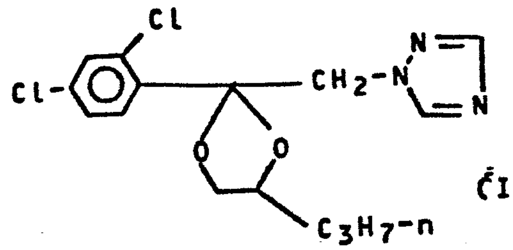

(II b-4)

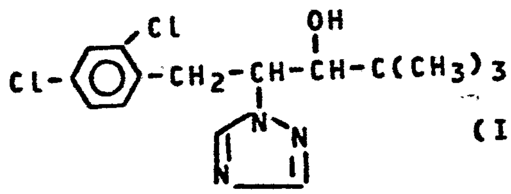

(II b-5)

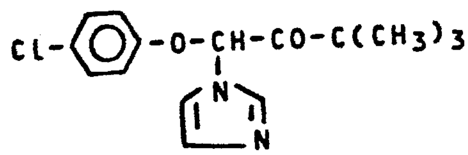

(II b-6)

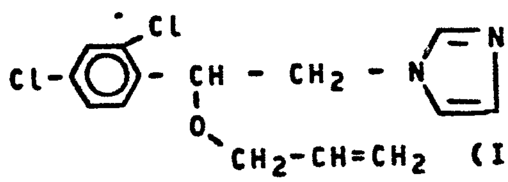

(IIb-7)

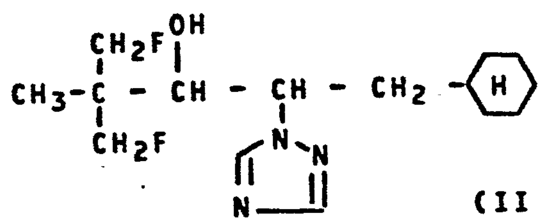

(II b-8)

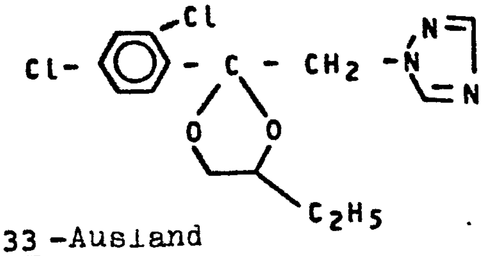

(II b-9)

und/oder eine Verbindung aus der Gruppe ($A_3$):

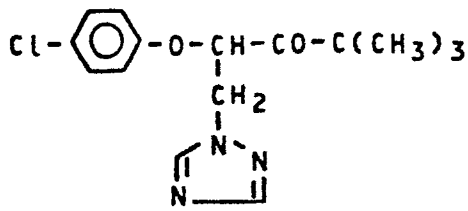

(II c-1)

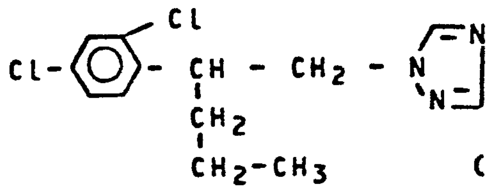

(II c-2)

und/oder eine Verbindung aus der Gruppe ($A_4$):

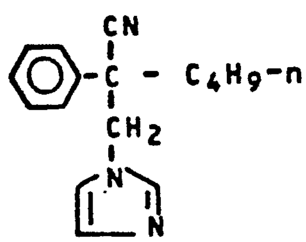

(II d-1)

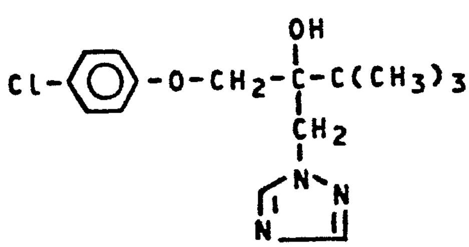

(II d-2)

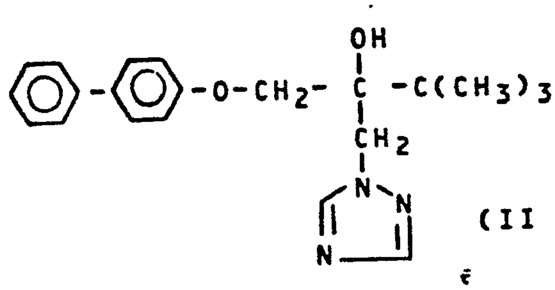

(II d-3)

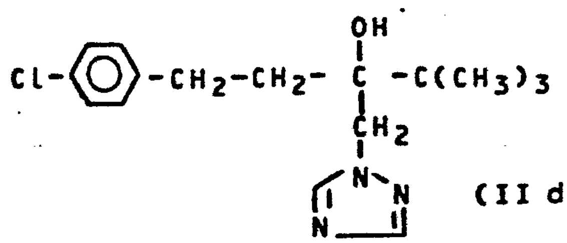

(II d-4)

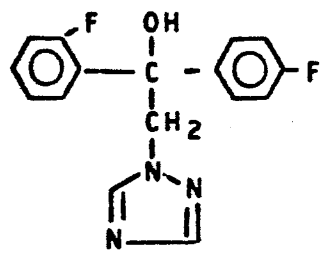

(IId-5)

und/oder eine Verbindung aus der Gruppe ($A_5$):

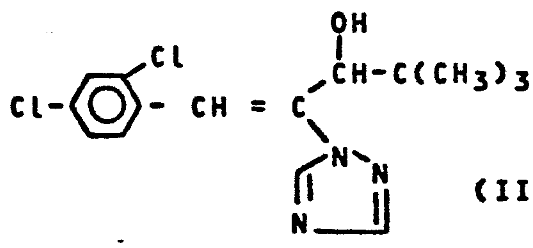

(II e-1)

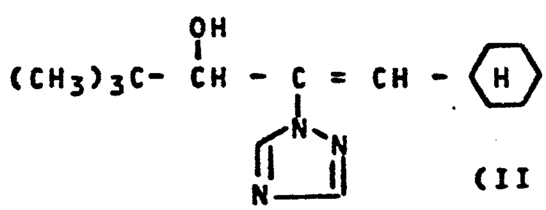

(II e-2)

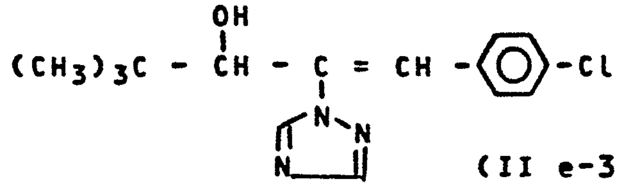

(II e-3)

und/oder die Verbindung aus der Gruppe ($A_6$):

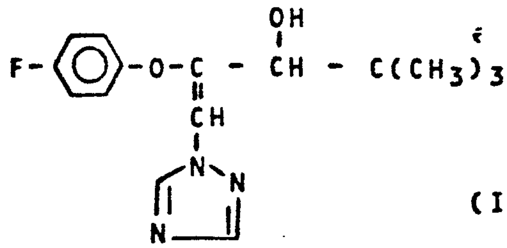

(II f-1)

und/oder die Verbindung aus der Gruppe ($A_7$):

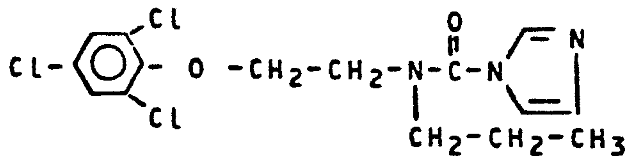

(II g-1)

und/oder eine Verbindung aus der Gruppe (B):

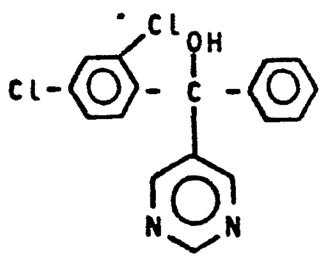

(III-1)

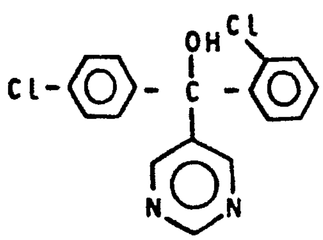

(III-2)

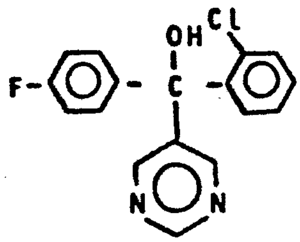

(III-3)

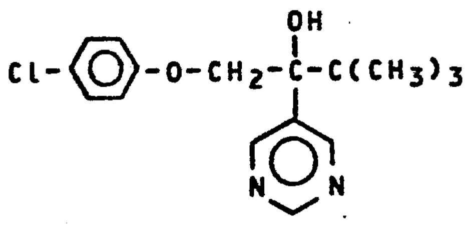

(III-4)

und/oder die Verbindung aus der Gruppe (C):

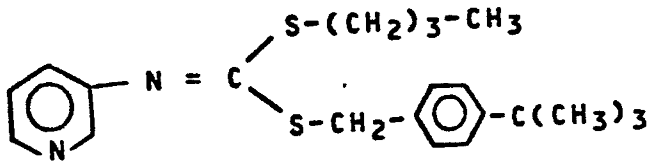

(IV-1)

und/oder die Verbindung aus der Gruppe (D):

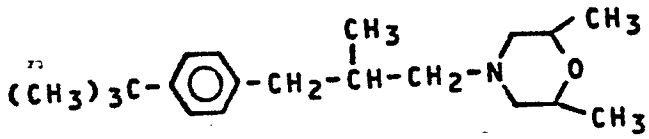

(V-1 )

5. Fungizide Mittel gemäß Anspruch 1, dadurch gekennzeichnet, daß in den Wirkstoffkombinationen das Gewichtsverhältnis von einer Amino-Verbindung der Formel (I) zu einem Wirkstoff aus den Gruppen A bis D zwischen 1:0,01 und 1:50 liegt.

6. Fungizide Mittel gemäß Ansprüchen 1 und 5, dadurch gekennzeichnet, daß das Gewichtsverhältnis zwischen 1:0,02 und 1:20 liegt.

7. Fungizide Mittel gemäß Ansprüchen 1, 5 und 6, dadurch gekennzeichnet, daß das Gewichtsverhältnis zwischen 1:0,05 und 1:5 liegt.

8. Verfahren zur Bekämpfung von Pilzen, dadurch gekennzeichnet, daß man eine Wirkstoffkombination gemäß Anspruch 1 auf Pilze oder deren Lebensraum einwirken läßt.

9. Verwendung von Wirkstoffkombinationen gemäß Anspruch 1 zur Bekämpfung von Pilzen.

10. Verfahren zur Herstellung von fungiziden Mitteln, dadurch gekennzeichnet, daß man eine Wirkstoffkombination gemäß Anspruch 1 mit Streckmitteln und/oder grenzflächenaktiven Mitteln vermischt.